(19) Europäisches Patentamt / European Patent Office / Office européen des brevets

(11) **EP 4 073 430 B1**

(12) **EUROPÄISCHE PATENTSCHRIFT**

(45) Veröffentlichungstag und Bekanntmachung des Hinweises auf die Patenterteilung:
**08.02.2023 Patentblatt 2023/06**

(21) Anmeldenummer: **21731581.1**

(22) Anmeldetag: **11.05.2021**

(51) Internationale Patentklassifikation (IPC):
**F23B 30/02** (2006.01)   **F23B 80/04** (2006.01)
**C10J 3/26** (1968.09)   **C10J 3/38** (1968.09)

(52) Gemeinsame Patentklassifikation (CPC):
**F23B 30/02; C10J 3/42; F23B 80/04; F23G 5/027; F23G 5/24; F23G 7/105; F23H 3/00; F23J 1/02;**
C10J 2200/152; C10J 2300/092; C10J 2300/0956; F23G 2201/40; Y02E 50/10

(86) Internationale Anmeldenummer:
**PCT/IB2021/053990**

(87) Internationale Veröffentlichungsnummer:
**WO 2021/229425 (18.11.2021 Gazette 2021/46)**

(54) **HOLZGASKESSEL**

WOOD GAS BOILER

CHAUDIÈRE À GAZ DE BOIS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.05.2020 DE 102020002793**

(43) Veröffentlichungstag der Anmeldung:
**19.10.2022 Patentblatt 2022/42**

(73) Patentinhaber: **Werner, Martin**
**91361 Pinzberg (DE)**

(72) Erfinder: **WERNER, Bernhard**
**91361 Pinzberg (DE)**

(74) Vertreter: **Küchler, Stefan**
**Stefan T. Küchler**
**Patentanwalt**
**Färberstraße 20**
**90402 Nürnberg (DE)**

(56) Entgegenhaltungen:
**EP-A1- 2 752 478   DE-B4-102009 042 104**
**DE-C- 508 816   US-A1- 2011 081 290**

**Beschreibung**

Die Erfindung bezieht sich auf einen Holzgaskessel mit einem Kesselgehäuse, das sich bevorzugt untergliedert in einen Kesselboden, einen unteren Kesselmantel, eine obere Kesselwand und einen Kesseldeckel, wobei im Inneren des Kesselgehäuses eine Einrichtung zur Luftzufuhr angeordnet ist sowie wenigstens einem Rost, wobei auf dem Rost aus Holzschnitzeln in einem Glutbett Holzgas erzeugt wird, das absaugbar und/oder nach außen abführbar ist, wobei im Bereich des Glutbetts oberhalb des Rostes ein Stern mit mehreren Flügeln vorgesehen ist, deren Längsachsen sich sternförmig in Richtung auf die Kesselwand erstrecken.

Bei der Holzvergasung in einem Holzgaskessel treten aus den eingesetzten Holzschnitzeln bei Temperaturen von etwa 150 °C zunächst Wasserdampf und Sauerstoff aus, bei höheren Temperaturen werden sodann auch feste Bestandteile der Holzschnitzel vergast, insbesondere Lignin und Cellulose.

Diese vergasten Bestandteile unterliegen sodann einer Teilverbrennung, wobei diese organischen Bestandteile mit Hilfe eines beschränkt zugesetzten Oxidationsmittels wie bspw. Luft bei Temperaturen von 700 °C bis 900 °C ohne Entzündung zu Kohlenmonoxid (CO) oxidiert werden, wobei ggf. weitere Komponenten entstehen wie bspw. Wasserstoff ($H_2$), Kohlendioxid ($CO_2$), Methan ($CH_4$) und Wasserdampf ($H_2O$) sowie ggf. eine Reihe von organischen Substanzen in unterschiedlicher Konzentration. Zusätzlich zu dem Holzgas als brennbarem Produktgas bleiben als feste Rückstände Asche und ggf. Holzkohle zurück, welche aus dem Holzgaskessel zu entfernen sind. Ferner könnte bei niedrigeren Temperaturen oder an kühleren Oberflächen der Wasserdampf, ggf. gemischt mit organischen Bestandteilen, zu einem Teer bzw. zu einem Holzgaskondensat kondensieren und dabei allmählich den Holzgaskessel zusetzen, so dass eine solche Kondensation nach Möglichkeit zu vermeiden ist.

Ein Holzvergasungsprozess ist in besonderem Maße durch die sog. Luftüberschusszahl $\lambda$ gekennzeichnet. Diese ist bei einer vollständigen Verbrennung größer oder gleich eins ($\lambda \geq 1$), bei einer reinen Pyrolyse gleich null ($\lambda = 0$), und liegt bei der in dem erfindungsgemäßen Holzgaskessel 1 ablaufenden Holzvergasung im Allgemeinen zwischen null und eins ($0 < \lambda < 1$). Wird die Luft- oder Sauerstoffzufuhr zeitweise ganz unterbrochen, kann eine reine Pyrolyse stattfinden, bei ($\lambda = 0$).

Durch die Holzvergasung ist es möglich, überschüssiges Holz einer nützlichen Verwendung als Holzgas zuzuführen und das dabei entstehende Holzgas zum Antrieb von Maschinen zu nutzen. In jedem Fall soll das dabei erzeugte Holzgas möglichst rein sein. Die bei der Produktion von Holzgas entstehende Menge an Verunreinigungen, insbesondere Holzgaskondensat wie Teer, sollte möglichst gering sein, einerseits um die Umwelt nicht zu belasten, und andererseits um einen möglichst langen Dauerbetrieb des Holzgaskessels zwischen zwei aufeinanderfolgenden Reinigungsarbeiten aufrechterhalten zu können.

Da der Niederschlag von Holzgaskondensat temperaturabhängig ist, ist die Gefahr des Niederschlags besonders in verhältnismäßig kalten Zonen innerhalb des Holzgaskessels am höchsten. Dies kann einerseits aus einer ungleichmäßigen Luftzufuhr resultieren, so dass in Ecken oder unzugänglicheren Stellen des Glutbettes kalte Zonen entstehen, in denen sich Teer bilden oder absetzen kann. Außerdem hat sich gezeigt, dass es in einem aufrecht stehenden Holzgaskessel ein radiales Temperaturgefälle gibt, wobei zumeist die Temperatur an der Peripherie höher ist als nahe beim Zentrum.

Außerdem ist es wünschenswert, dass der Holzgaskessel dauerhaft eine möglichst hohe Umsetzungsleistung von Holzschnitzeln in Holzgas besitzt. Bei konventionellen Holzgaskesseln kann es durchaus passieren, dass sich nach einer längeren Betriebsphase die Glutzone mit feinen, unverbrannten Kohlepartikeln zusetzt. Dann wird der Volumenstrom geringer, und die Umsetzungsleistung kann nachlassen. Insbesondere können sich dann sogar unmittelbar im Glutbett die weiter oben beschriebenen, unerwünschten kalten Zonen ausbilden, wo sich nicht nur die Umsetzungsleistung reduziert, sondern sich auch das teerartige Holzgaskondensat niederschlägt.

Ein gattungsgemäßer Holzgaskessel ist der DE 10 2009 042 104 B4 zu entnehmen. Die dortige Vorerfindung beruht auf der Überlegung, dass sich ein weitgehend teerfreies Holzgas produzieren lässt, wenn die Konstruktion so gewählt ist, dass das Holzgas direkt aus der Glutzone und nicht nur von ihrem äußeren Rand oder von der Oberfläche abgezogen wird. Die Vorerfindung schlägt einen Holzgaskessel vor, wobei im Bereich des Glutbetts ein um eine zentrale Vertikalachse drehbarer Stern angeordnet ist, der eine Anzahl von Flügeln besitzt. Diese Flügel erstrecken sich sternförmig in Richtung auf die Kesselwand und sind als unten offene Absaugkanäle zur Weiterleitung von Holzgas ausgebildet. Sie besitzen in ihrer Oberseite jeweils eine Anzahl von Löchern zum Eintritt des Holzgases aus dem Glutbett, das an deren äußeren Enden wieder austreten kann. Dieser Stern ist von einer Einfassung umgeben, die mit dem Stern mitdrehbar ist und Öffnungen zur Aufnahme der äußeren Enden der Flügel besitzt, so dass das aus den Enden der Flügel austretende Holzgas aus dem Bereich zwischen der Einfassung und der Kesselwand absaugbar ist. Durch die Flügelform soll gewährleistet sein, dass während des Betriebs Holz und Glutstückchen nicht an ihnen hängen bleiben. Demgemäß ist vorgesehen, dass diese Flügel dachförmig ausgebildet sind mit zwei oben gelegenen, gegeneinander geneigten Dachflächen. In diesen beiden Dachflächen der Flügel sind jeweils die Löcher zum Eintritt des Holzgases aus dem Glutbett angeordnet. Es hat sich jedoch gezeigt, dass sich die aus der DE 10 2009 042 104 B4 bekannte Flügelgeometrie noch verbessern lässt. Denn der Bereich innerhalb des Glutbettes oberhalb des Ascherostes unterliegt der Gefahr, dass dort die Asche die Öffnungen in den Flügeln zusetzt und der weitere Holzgasabzug beeinträchtigt wird, und zwar um so mehr, als bei einer verminderten Konvektion die unerwünschten kalten Stellen auftreten mit dem vermehrten Niederschlag von Holzgaskondensat, welches ebenfalls die Öffnungen in den Flügeln weiter verklumpt.

Wünschenswert ist es daher, einen Holzgaskessel der eingangs genannten Art derart weiterzubilden, dass im Dauerbetrieb bei gleichmäßig hoher Umsetzungsleistung ein weitgehend sauberes, von festen und teerartigen Rückständen freies Holzgas entsteht, und dass sich möglichst wenig Holzgaskondensat im Holzgaskessel niederschlägt und dort zu Verklumpungen führt und dabei verhältnismäßig kalte Zonen mit sich bringt.

Erfindungsgemäß ist daher bei einem gattungsgemäßen Holzgaskessel vorgesehen, dass die Flügel des Sterns jeweils um horizontale Drehachsen drehbar sind, welche radial zu der zentralen vertikalen Achse des Holzgaskessels verlaufen, insbesondere entlang des jeweils betreffenden Flügels.

Infolge dieses Freiheitsgrades der Bewegung können bspw. Öffnungen in diesen radialen Flügeln in regelmäßigen zeitlichen Abständen um jeweils einen Winkel von einem Bruchteil von 360° weitergedreht werden, beispielsweise um jeweils 120°, so dass sich die Orientierung der betreffenden Öffnungen im Raum immer wieder ändert und daher nicht die Gefahr des kontinuierlichen Zusetzens dieser Öffnungen gegeben ist. Vielmehr wirkt die Schwerkraft je nach der Schwenkstellung dieser Flügel im Bereich der dortigen Öffnungen jeweils unterschiedlich. Mehr noch, wenn sich solche Öffnungen im Bereich der Unterseite des betreffenden Flügels befinden, können diese sogar zusätzlich an einem Aschrost od. dgl. abgestreift werden.

Die Erfindung erlaubt eine Weiterbildung dahingehend, dass auch der Flügel-Stern um eine zentrale, vertikale Achse drehbar ist.

Es hat sich bewährt, dass wenigstens ein Flügel eine langgestreckte Gestalt aufweist mit einer Längsachse, die zu der radial in Bezug auf die zentrale vertikale Drehachse verlaufenden Drehachse des betreffenden Flügels parallel oder koaxial ist. Eine solche langgestreckte Gestalt begünstigt die Drehbarkeit eines Flügels innerhalb des Glutbettes, weil ein solcher Flügel dann schmäler als lang ist und sich demnach innerhalb des Glutbettes nicht verklemmen kann.

Eine profilförmige Gestalt wenigstens eines Flügels trägt dazu bei, dass entlang des Profils überall weitgehend konstante Kräfteverhältnisse und Umgebungsbedingungen herrschen.

Der wenigstens eine bevorzugt profilförmige Flügel kann einen runden oder mehreckigen Querschnitt aufweisen. Wichtig ist vor allem, dass keine übermäßig exponierten Bereiche des Flügelmantels vorhanden sind, welche sich bei einer Drehung um die Längsachse des Flügels verklemmen und sodann die (Dreh-) Mechanik in Mitleidenschaft ziehen könnten.

Es liegt im Rahmen der Erfindung, dass wenigstens ein Flügel nach außen ragende Lamellen oder sonstige Fortsätze aufweist. Solche Fortsätze von bevorzugt begrenzter radialer Erstreckung bezüglich der Flügel-Längsachse können dazu verwendet werden, um das Glutbett bei einer Drehung des betreffenden Flügels zu durchmischen.

Erfindungsgemäß ist weiterhin vorgesehen, dass wenigstens ein Flügel hohl ausgebildet ist, insbesondere als Hohlprofil. Ein im Inneren des Flügels angeordneter Hohlraum kann infolge der langgestreckten Geometrie als ganz oder überwiegend in radialer Richtung verlaufender Strömungskanal dienen und beispielsweise Holzgas aus dem Glutbett ableiten.

Zu diesem Zweck - also der Ableitung von Holzgas aus dem Glutbett - sollte wenigstens ein Flügel in seiner Mantelfläche eine oder mehrere Öffnungen aufweisen, durch welche das Ein- oder Ausströmen von Holzgas in oder aus dem betreffenden Flügel möglich ist. Somit bietet ein solcher Flügel weiten Bereichen des Glutbettes - im Idealfall entlang dessen gesamter Raidalerstreckung - die Möglichkeit, das dort entstehende Holzgas unmittelbar abzugeben.

Wenn - wie die Erfindung weiterhin vorsieht - wenigstens eine Öffnung länglich ausgebildet ist, vorzugsweise wobei die Längsrichtung der Öffnung quer zu der Längsachse des betreffenden Flügels ausgerichtet ist, so ist jedenfalls ein Eindringen größerer Kohlestücke aus dem Glutbett in einen solchen Flügel unmöglich, und dieser unterliegt bereits unter diesem Aspekt nur einer begrenzten Tendenz des Zusetzens.

Der Hohlraum innerhalb wenigstens eines Flügels dient bevorzugt als Kanal zur Weiterleitung von Holzgas. Er kann diesbezüglich sogar Bestandteil einer Absaugeinrichtung sein, um das Holzgas aktiv aus dem Glutbett abzuziehen.

Theoretisch können beide Enden eines erfindungsgemäßen, drehbaren Flügels zum Austritt des Holzgases ausgebildet sein. Allerdings ist es von dem radial außen liegenden Ende aus leichter, das Holzgas aus dem Holzgaskessel abzuleiten oder abzuziehen, weshalb die Strömungsrichtung innerhalb eines Kanals in einem Flügel bevorzugt nach radial außen gerichtet ist, also zum Kesselmantel hin. Solchenfalls erlaubt eine Öffnung am radial außen liegenden Ende des Flügels das Ausströmen des Holzgases aus dem betreffenden Flügel.

Die Erfindung sieht weiterhin vor, dass wenigstens ein Flügel an seiner radial innen liegenden Stirnseite und/oder an seiner radial außen liegenden Stirnseite mit einem Lagerungsfortsatz versehen ist. Solche Lagerungsfortsätze können bspw. die Gestalt von Achsstummeln aufweisen, von denen bevorzugt zumindest einer ebenfalls hohl ausgebildet sein sollte, um die Durchleitung von Holzgas zu ermöglichen. Ein Lagerungsfortsatz könnte also bspw. eine kreiszylindermantelförmige Gestalt haben. Bevorzugt gibt es zwei miteinander fluchtende Lagerungsfortsätze an beiden Stirn- oder Endseiten eines profilförmigen Flügels, wobei nur einer von beiden hohl ausgebildet sein muss.

Wenigstens ein Pendant zu einem dem Zentrum des Holzgaskessels zugewandten Lagerungsfortsatz eines Flügels sollte im Bereich eines zentralen Kerns oder einer Nabe des Sterns angeordnet sein, um den betreffenden Flügel an dessen dem Zentrum des Holzgaskessels zugewandten Ende zu führen. Bevorzugt erstreckt sich keiner der erfindungsgemäßen Flügel bis zu der vertikalen Mittelachse des Holzgaskessels oder gar durch jene hindurch, sondern endet stets vor diesem Zentrum in einer Art Kern- oder Nabenkörper, ähnlich zu den Speichen eines Rades. Ein solches Lagerungs-Pendant kann beispielsweise als vorzugsweise kreisrundes Loch in einem solchen Kern- oder Nabenkörper ausgebildet sein, zur Aufnahme des betreffenden Lagerungsfortsatzes, so dass sich eine Struktur wie bei einer Reiblagerung ergibt. Es hat sich gezeigt, dass sich eine solche einfache Art der Lagerung bei den hohen Temperaturen im Bereich des Glutbettes besser bewährt als komplexere Lagerungsarten.

Ferner sollte wenigstens ein Pendant zu einem dem Kesselgehäuse zugewandten Lagerungsfortsatz eines Flügels im Bereich einer den Stern umgebenden Einhausung angeordnet sein, die sich bevorzugt synchron mit dem Stern mitdrehen kann. Sofern ein solches Lagerungs-Pendant als vorzugsweise kreisrundes Loch in der Einhausung ausgebildet ist, so lässt sich die Lagerung einerseits besonders einfach dadurch bewirken, dass der betreffende Lagerungsfortsatz in dieses Loch eingesteckt wird, und andererseits wird dann das Holzgas durch den hohl ausgebildeten Lagerungsfortsatz durch die Einhausung hindurch geführt und verlässt dabei das Glutbett.

Die den Stern umgebende Einhausung sollte mit einem zentralen Kern oder Nabenkörper innerhalb des Sterns starr verbunden sein, insbesondere über mehrere strahlenförmige Speichen, insbesondere radiale Bleche. Indem auf diesem Weg eine synchrone Bewegung zwischen diesen Teilen sichergestellt wird, kann sich die rotierende Einheit aus Kern oder Nabenkörper, Stern und Einhausung weder verformen noch verklemmen, so dass eine dauerhaft leichtgängige Drehbewegung gewährleistet ist.

Darüber hinaus empfiehlt die Erfindung, dass die den Stern umgebenden Einhausung eine oder mehrere Öffnungen zum Austritt oder Absaugen von Holzgas versehen ist. Diese Öffnungen vergrößern den Abströmquerschnitt des Holzgases über den Querschnitt der Strömungskanäle innerhalb der erfindungsgemäßen Flügel hinaus und begünstigen damit die Umsetzung der eingesetzten Holzschnitzel in das gewünschte Holzgas.

Bevorzugt erfolgt die Drehung wenigstens eines Flügels um seine Längsachse oder um eine bezüglich der vertikalen Drehachse radial verlaufende Drehachse über wenigstens einen mit dem betreffenden Flügel gekoppelten oder koppelbaren Drehantrieb. Allerdings sollte hierbei die eigentliche Antriebseinheit nicht innerhalb des Holzgaskessels angeordnet sein, um Beschädigungen infolge der hohen Temperaturen zu vermeiden. Auch muss nicht jeder einzelne Flügel über einen eigenen Antrieb verfügen, sondern im Idealfall ist für alle Flügel gemeinsam ein einziger Antrieb vorgesehen, der überdies noch andere Aufgaben erledigen kann, beispielsweise die Drehung des Sterns samt Kern- und/oder Nabenkörper und Einhausung.

Es liegt im Rahmen der Erfindung, dass der Antrieb für wenigstens einen Flügel diskontinuierlich erfolgt. Das Glutbett sollte nicht beständig in Bewegung sein, damit glühende Bereiche nicht zerrissen werden und die Umsetzung der Holzschnitzel in Holzgas nicht beeinträchtigt wird. Es ist vielmehr zu bevorzugen, dass die Flügel eine zeitlang in Ruhe bleiben - beispielsweise 10 bis 40 Minuten lang - und erst anschließend findet eine kurzzeitige Drehung statt, die allerdings nicht zu einer vollen Umdrehung eines Flügels führen sollte, sondern nur zu einer Drehung um einen Bruchteil von 360°, so dass verschiedene Öffnungen in dem Mantel des betreffenden Flügels abwechselnd nach oben und nach unten gelangen und also nicht der Gefahr eines Zusetzens ausgesetzt werden.

Es ist prinzipiell nicht erforderlich, dass sich der Stern und die Einfassung permanent drehen. Demgemäß zeichnet sich eine weitere Ausbildung dadurch aus, dass der Stern und die Einfassung in vorgegebenen Zeitintervallen drehbar sind. Hierbei können der Stern und die Einfassung schrittweise drehbar sein. Im Betrieb hat sich ein Antrieb bewährt, der derart ausgebildet ist, dass sich der Stern und die Einfassung etwa eine Minute lang drehen, wonach ca. eine Viertel Umdrehung zurückgelegt ist, und dass danach der Stern und die Einfassung ca. 20 bis 30 Minuten lang stehen bleiben.

Eine bevorzugte Ausführungsform der Erfindung zeichnet sich dadurch aus, dass der Antrieb für wenigstens einen Flügel von einer Drehung des Sterns abgeleitet ist. Wie soeben ausgeführt, sollte auch die Drehung des Sterns diskontinuierlich erfolgen, da diese Drehung um eine vertikale Achse ebenfalls das Glutbett durcheinander bringt und im Durchglühen befindliche Bereiche des Glutbettes auseinander reißen könnte. Da beide Bewegungen nicht kontinuierlich erfolgen müssen, besteht die Möglichkeit, beide Bewegungen miteinander zu koppeln. Dies hat den weiteren Vorteil, dass die Flügel für ihre Drehbewgung überhaupt keinen eigenen Drehantrieb benötigen, sondern einfach die Drehbewegung des Sterns übernehmen können. Die Drehbewegung des Sterns kann beispielsweise derart erfolgen, dass dieser sich bei jeder Drehbewegung gerade um einen Winkel $\alpha = 360° / n$ weiter dreht, wobei n die Anzahl der Flügel ist. Natürlich kann dieser Winkel sogar noch kleiner sein: $\alpha < 360° / n$, falls die Drehbewegungen in kürzeren Zeitabständen stattfinden. Bei längeren Wartezeiten ist es auch möglich, dass ein Drehwinkel größer ist: $\alpha > 360° / n$.

Die Erfindung lässt sich dahingehend weiterbilden, dass wenigstens ein Flügel mit einer Verzahnung versehen ist, deren Zähne radial zu der Längsachse des Flügels auskragen, so dass jeweils einer dieser Zähne bei einer bestimmten Drehstellung des Sterns mit einem vorzugsweise feststehenden Finger oder einem sonstigen Hindernis in Eingriff gelangt und dabei den Flügel weiterdreht. Die Anzahl m der feststehenden Finger oder sonstigen Hindernisse im Bereich der Verzahnungen an den Flügeln kann verschieden gewählt werden. Sie könnte einerseits der Anzahl n der Flügel entsprechen: m = n, so dass alle Flügel gleichzeitig weiter gedreht werden, falls die Finger in äquidistanten Abständen an dem Umfang der Einhausung oder Kesselwand angeordnet sind, mit entsprechenden Zwischenwinkeln $\beta$:

$$\beta = 360° / m.$$

Die einzelnen Zwischenwinkel $\beta$ könnten jedoch bewusst leicht von dieser äquidistanten Ausrichtung abweichend angeordnet werden, damit nicht alle Flügel sich gleichzeitig drehen, sondern zeitlich um ein gewisses Maß versetzt. Dies hätte den Vorteil, dass der Drehantrieb nicht einer pulsierenden Last ausgesetzt wird, sondern im Verlauf einer Drehung des Kerns gleichmäßig belastet wird.

Beispielsweise kann vorgesehen sein, dass der Stern samt Einfassung mittels eines zentral angeordneten Kernrohrs um eine gemeinsame Vertikalachse drehbar ist. Hierbei sollte zum Antrieb des Kernrohrs ein Antriebsring, der unterhalb des Rosts gelegen ist, ein Elektromotor, der außerhalb der Kesselwand angeordnet ist, sowie eine vom Elektromotor aus durch die Kesselwand in den Kesselraum reichende Welle vorgesehen sein.

Um ggf. Störungen leicht zu beheben, sollte ein Motor gewählt werden, der wahlweise vorwärts oder rückwärts läuft.

Um ein leichtes Abströmen des erzeugten Holzgases zu ermöglichen, kann vorteilhafterweise die Einfassung mit einer Anzahl von Durchbrechungen zum Durchtritt von Holzgas aus der Holzglut versehen sein derart, dass das Holzgas in den Bereich zwischen der Einfassung und der Kesselwand eintritt.

Aus diesem Bereich wird es sodann mittels einer Pumpe abgeleitet und einer weiteren Verwendung, z. B. zum Antrieb eines Motors, zugeführt.

Bei einem zweigeteilten Kesseleinsatz, bestehend aus einer oberen, vorzugsweise feststehenden Kesselwand und einer unteren; in einem Spalt dazu endenden Kesselwand, wobei letztere bevorzugt durch die ggf. drehbar gelagerte Einfassung des Sterns gebildet sein kann, lässt sich ferner in dem Bereich des besagten Spaltes zwischen dem unteren Ende der oberen Kesselwand und dem oberen Ende der unteren Kesselwand eine ringförmige Dichtung anordnen mit einem Dichtungselement aus einem zylindermantelförmig gebogenen Metallstreifen, der konzentrisch zu einer zentralen Achse der oberen Kesselwand angeordnet ist. Die Aufgabe dieser Dichtung besteht darin, einerseits Holzschnitzel sowie Kohle- und Aschepartikel an einem Durchtritt nach außen aus dem Glutraum heraus zu hindern, andererseits aber einen Abzug des erzeugten Holzgases zu erlauben.

Bevorzugt verfügt das besagte Dichtungselement über mehrere, entlang seines Umfangs angeordnete, radiale Abstandhalter, mittels derer es von der oberen Kesselwand in radialer Richtung auf Abstand gehalten wird. Durch diese Abstandhalter wird unmittelbar im Bereich des Spaltes sichergestellt, dass dieser sich nicht infolge einer exzentrischen Verlagerung des Einsatzes bzw. der unteren Kesselwand gegenüber der oberen Kesselwand bereichsweise in radialer Richtung aufweiten kann. Somit behält der verbleibende Spalt zwischen dem erfindungsgemäßen Dichtungselement und einem dortigen Abschnitt der Kesselwand stets eine überall gleichbleibende Weite bzw. kann sich nicht in einzelnen Bereichen aufweiten. Demzufolge wird größeren Kohle- oder Aschepartikeln keine Gelegenheit gegeben, in diesen verbleibenden Spalt einzudringen und diesen zuzusetzen.

Es hat sich als günstig erwiesen, dass die radialen Abstandhalter an dem Dichtungselement fixiert sind und in radialer Richtung zu der oberen Kesselwand vorspringen. Diese Abstandhalter können bspw. angeschweißt oder angeschraubt sein. Eine derartige Fixierung stellt sicher, dass sie sich auch bei Hitzeeinwirkung und/oder größeren (Klemm-) Kräften nicht gegeneinander verschieben oder gar lösen können.

Indem die radialen Abstandhalter an dem Dichtungselement, eine flächige Gestalt aufweisen, die in einer vertikalen Radialebene liegt, ergibt sich dadurch quasi nur eine schmale, stegartige Verengung bzw. Unnterbrechung des rundumlaufenden Spaltes, so dass weiterhin ein maximaler Durchsatz von Holzgas möglich ist.

Die Erfindung empfiehlt, dass das Dichtungselement weder mit der oberen Kesselwand noch mit der unteren Kesselwand integriert ist. Dadurch ist die Möglichkeit eröffnet, sowohl an dem Übergang von dem Dichtungselement zur oberen Kesselwand wie auch an dem Übergang von dem Dichtungselement zur unteren Kesselwand je eine Passage für ausströmendes Holzgas vorzusehen.

In weiterer Verfolgung dieses Gedankens kann vorgesehen sein, dass das Dichtungselement an seiner unteren Stirnseite mehrere entlang seines Umfangs angeordnete, vertikal nach unten vorspringende Stege aufweist und mit diesen auf dem oberen Rand der unteren Kesselwand aufsitzt. Zwischen benachbarten Stegen bleibt sodann je ein Durchströmkanal frei.

Damit die Stege nicht von dem oberen Rand der unteren Kesselwand herabrutschen können, kann jene als flache Ringscheibe ausgebildet sein, auf welcher das Dichtungselement mit seinen vertikal nach unten vorspringenden Stegen aufsitzt. Die radiale Breite dieser flachen Ringscheibe kann z.B. der dreifachen radialen Dickenerstreckung des ringförmigen Dichtungsmittels entsprechen oder noch größer bemessen sein, insbesondere der fünffachen radialen Dickenerstreckung des ringförmigen Dichtungsmittels entsprechen oder noch größer bemessen sein.

Weitere Vorteile ergeben sich dadurch, dass die untere Kesselwand gegenüber der oberen Kesselwand verdrehbar ist, insbesondere um eine zentrale vertikale Achse des Holzgaskessels. Solchenfalls kann die untere Kesselwand mit nach innen ragenden Armen, Strahlen, Flügeln od. dgl. versehen sein, welche bei Drehung der unteren Kesselwand die Kohle- und Aschepartikel innerhalb des Glutbettes umwälzen und dadurch für eine gleichmäßige Glut sorgen.

Diesem Erfindungsgedanken folgend sieht die Erfindung weiter vor, dass die untere Kesselwand durch eine zylindermantelförmige äußere Einfassung eines drehbaren Einsatzes oberhalb des Ascherostes gebildet wird. Sofern nicht nur die untere Kesselwand drehbar ist, sondern ein ganzer Einsatz im unteren Bereich des Hozgaskessels, lässt sich der Drehantrieb über eine zentrale Achse bewirken oder zumindest nahe einer zentralen Achse, wodurch sich ggf. die Konstruktion vereinfacht.

Die Erfindung zeichnet sich ferner aus durch einen Mitnehmer, welcher in den Spalt zwischen den beiden Enden des aus einem Metallstreifen gebogenen ringförmigen Dichtungselements eingreift und an einem Supportelement, bspw. einer Kesselwand, festgelegt ist, so dass das ringförmige Dichtungselement gegenüber dem betreffenden Supportelement unverdrehbar ist. Während die unterseitigen Stege die Höhe des Dichtungselements entlang einer vertikalen Achse des Holzgaskessels festlegen und die radialen Abstandhalter dessen horizontale Lage bzw. Konzentrizität bezüglich dieser vertikalen Achse bestimmen, ist es die Aufgabe dieses Mitnehmers, den Drehwinkel des Dihtungsmittels um eben diese vertikale Achse vorzugeben. Durch deen Mitnehmer wird dieser Drehwinkel mit dem betreffenden Supportelement gekoppelt. Indem hierfür bevorzugt eine feststehende Kesselwand verwendet wird, gibt es eine relative Drehbewegung zwischen dem dann ebenfalls unverdrehten Dichtungselement und einem bspw. verdrehbaren Einsatz, auf welchem sich das Dichtungselement über seine unterseitigen Stege abstützt. Diese Relativbewegung wiederum sorgt dafür, dass keine Kohle- oder Aschepartikel in den Ausnehmungen zwischen den unterseitigen Stegen eingeklemmt werden können.

Der Mitnehmer lässt sich optimal in den Spalt zwischen den beiden Enden des aus einem Metallstreifen gebogenen ringförmigen Dichtungselements einsetzen, wenn er eine Lasche mit einer flächigen Gestalt aufweist, die in einer vertikalen Radialebene liegt, bezogen auf die zentrale Achse des Holzgaskessels.

Wenn - wie die Erfindung weiterhin vorsieht - der Mitnehmer oder dessen flächige Lasche in, bezogen auf das zylindermantelförmig gebogene Dichtungselement, tangentialer Richtung vorspringende Wülste oder Fortsätze aufweist, welche das zylindermantelförmig gebogene Dichtungselement an dessen Innen- und/oder Außenseite führend umgreifen, so lässt sich auf diesem Wege ausschließen, dass sich das aus einem Metallstreifen gebogene Dichtungselement bspw. von dem Supportelement weg biegen könnte, wrunter dessen Dichtungsfähigkeit leiden könnte.

Ferner kann bei einem gattungsgemäßen Holzgaskessel ein zentraler Kern in Form eines Mantels vorgesehen sein, der einen zentralen Bereich des Holzgaskessels umschließt und wenigstens eine umlaufende Reihe von Öffnungen oder Durchbrechungen aufweist, um einen Austausch von Holzschnitzeln und Holzkohle zwischen einem zentralen Bereich innerhalb des besagten Kerns und einem peripheren Bereich außerhalb des Kerns des Holzgaskessels zu erlauben. Die Mantelfläche des besagten Kerns bildet dabe eine Art Trennwand zwischen sind zwei voneinander weitgehend unabhängigen Bereichen, nämlich dem besagten zentralen Bereich und dem besagten peripheren Bereich, so dass im Fall des Zusetzens eines dieser Räume durch den jeweils anderen eine Art Bypass geschaffen ist, durch den der Abzug des Holzgases weiterhin möglich ist, wobei infolge der Löcher in der betreffenden Trennwand eine dortige Querströmung innerhalb des nicht zugesetzten Bereichs ermöglicht wird, die Partikel aus dem zugesetzten Bereich mitreißt und dadurch eine im Entstehen begriffene Verklumpung wieder aufgelöst wird.

Die Mantelfläche des besagten zentralen Kerns kann sich auf Höhe des besagten peripheren Dichtungselements befinden. Durch eine von dem Dichtungselement innerhalb des Spaltes aufgespannte Ebene einerseits und durch die Mantelfläche des zentralen Kerns andererseits wird der Glutraum innerhalb des besagten Holzgaskessels somit in insgesamt vier Bereiche unterteilt, nämlich in einen oberen Bereich außerhalb des Kerns, einen oberen Bereich innerhalb des Kerns, einen unteren Bereich innerhalb des Kerns und einen unteren Bereich außerhalb des Kerns. Diese Reihenfolge definiert auch bevorzugt den Lauf der Holzschnitzel durch den Holzgaskessel. Die Holzschnitzel gelnagen nach Einfüllen bspw. durch eine oberseitige Einfüllschleuse in einen oberen Bereich des Kessels oberhalb des Glutraums. Von dort gelangen sie bevorzugt durch einen Grobfilter in den eigentlichen Glutraum, und zwar in dessen oberen Bereich außerhalb des Kerns. Von dort können sie bspw. über ein trichterförmiges Führungselement zu einer Reihe von oberen Durchbrechungen des zentralen Kerns hin geführt werden, wo sie in den Kern hinein gelangen, nämlich zunächst in den oberen Kembereich. Dort sinken sie nach unten bis in den unteren Kernbereich, wo sie dann über ein zweite Reihe von unteren Durchbrechungen den zentralen Kern wieder verlassen können und direkt in das Glutbett außerhalb des Kerns abgegeben werden. Der dortige, untere periphere Bereich des Glutraums ist von einer drehbaren Einfassung umgeben und wird durch den bevorzugt drehbaren Stern durchmischt, während der obere periphere Raum außerhalb des Kessels von einer feststehenden Kesselwand umgeben ist und daher keine aktive Durchmischung erfährt.

Je nach Ausführungsform kann der zentrale, mantelförmige Kern des Holzgaskessels eine rotationssymmetrische oder zylindrische Gestalt aufweisen, insbesondere eine kreiszylindrische Gestalt, oder eine prismatische Gestalt, insbesondere mit einem Querschnitt in Form eines regelmäßigen Vielecks.

Damit der Kern inmitten des Holzgaskessels auch bei rauem Betrieb seine Form stabil beibehält, kann die Mantelfläche des Kerns durch vertikale Rippen oder spantenförmige Träger oder Bleche stabilisiert sein, welche sich vorzugsweise entlang der Innenseite der Mantelfläche des Kerns erstrecken.

Eine bevorzugte Konstruktionsvorschrift besagt, dass der Außendurchmesser oder der mittlere Außendurchmesser des zentralen, mäntelförmigen Kerns des Holzgaskessels mindestens einem Drittel des Kesseldurchmessers im Bereich der oberen Kesselwand entspricht. Damit hat der Raum innerhalb des zentralen Kerns wenigstens etwa einen Querschnitt von etwa einem Sechstel des Raums außerhalb des zentralen Kerns. Ein solcher Querschnitt ist erforderlich, damit der Innenraum des Kerns nicht zu Verstopfungen oder Verklumpungen neigt. Andererseits befindet sich das eeigentliche Glutbett radial außerhalb des zentralen Kerns, so dass der Kern auch nicht zu groß gewählt werden sollte, damit genügend Holzgas erzeugt werden kann. Es wird daher empfohlen, den Außendurchmesser oder der mittlere Außendurchmesser des zentralen, mantelförmigen Kerns des Holzgaskessels nicht größer zu wählen als die Hälfte des Kesseldurchmessers im Bereich der oberen Kesselwand.

Der zentrale, mantelförmige Kern des Holzgaskessels kann von einer zentralen Stange oder Achse in vertikaler Richtung führend durchsetzt werden, um eine leichtgängige Beweglichkeit der drehenden Komponenten innerhalb des Holzgaskessels sicherzustellen.

Es hat sich als vorteilhaft erwiesen, dass der zentrale, mantelförmige Kern des Holzgaskessels unten von einer kreisförmigen, mehreckigen und/oder ringförmigen Bodenplatte abgeschlossen oder stabilisiert bzw. versteift ist. Dieser Bodenplatte obliegt es, ein direktes Hindurchfallen der Holzschnitzel in dem Kern auf den Ascherost zu verhindern; vielmehr sind die Holzschnitzel und sonstigen Partikel gezwungen, den Kern durch die unteren, lateralen Durchbrechungen wieder zu verlassen und gelangen von dort unmittelbar in das Glutbett, wo sie sodann in Holzgas umgesetzt werden.

Unterhalb der Bodenplatte des zentralen, mantelförmigen Kerns des Holzgaskessels kann eine Mechanik angeordnet sein, welche in der Lage ist, den drehbaren Einsatz und/oder den zentralen Kern in eine Drehbewegung um die zentrale vertikale Achse des Holzgaskessels zu versetzen. Bevorzugt befindet sich der eigentliche Antrieb für diese Mechanik außerhalb des Holzgaskessels.

Dem normalen Durchsatz von Holzschnitzeln durch den Kessel von einer oberseitigen Einfüllschleuse nach unten bis zu einem unerseitigen Ascherost folgend ist zum Eintritt von Holz-, Kohle- und/oder Aschepartikeln in den Kern in dessen Mantelfläche eine erste, rundum laufende Reihe von oberen Durchbrechungen angeordnet. Diese oberen Durchbrechungen befinden sich vorzugsweise auf Höhe deroberen, unverdrehbaren Kesselwand.

Zum Austritt der Holz-, Kohle- und/oder Aschepartikel aus dem Kern dient dagegen eine zweite, rundum laufende Reihe von unteren Durchbrechungen in der Mantelfläche des Kerns. Diese unteren Durchbrechungen befinden sich eines verdrehbaren Einsatzes, dessen peripherer, zylinderförmiger Mantel die obere Kesselwand nach unen fortsetzt, vorzugsweise mit einem abgedichteten Spüalt dazwischen.

Bevorzugt ist je eine der oberen Durchbrechungen in einer geraden Flucht über einer unteren Durchbrechung angeordnet.

Hinsichtlich der Gestalt der Durchbrechungen hat sich eine Geometrie bewährt, wobei die Breite einer Durchbrechung in der Mantelfläche des Kerns im unterem Bereich der betreffenden Durchbrechung konstant ist und sich in ihrem oberen Bereich von unten nach oben verjüngt. Da sich die Holzschnitzel und Kohlepartikel innerhalb des Holzgaskessels von oben nach unten bewegen, finden diese im Laufe einer vertikalen Setzbewegung eine stets zunehmende Öffnungsbereite in der Mantelfläche des Kerns vor. Die nach unten voninander divergierenden Seitenkanten der Durchbrechungen dienen dem Zweck, selbst größere Partikel durch diese Durchbrechungen hindurch zu lenken, ohne dass es zu Verstopfungen kommt.

In Weiterverfolgung dieses Erfindungsgedankens kann vorgesehen sein, dass die Durchbrechungen in der Mantelfläche des Kerns nach Art eines drei-, vier-oder fünfeckigen Fensters oder nach Art eines bogenförmigen Fensters gestaltet sind.

Ferner kann die Mantelfläche des Kerns auf einem Niveau zwischen den oberen Durchbrechungen und den unteren Durchbrechungen von einem glocken- oder trichterförmigen oder konischen Körper umgeben sein. Hierbei handelt es sich um Führungseinrichtungen, welche den Strom von Holzschnitzeln innerhalb des Holzgaskessels führen sollen. Falls sich der den zentralen, mantelförmigen Kern des Holzgaskessels außen umgebende, glocken- oder trichterförmige oder konische Körper sich von unten nach oben erweitert, so werden dabei die Holzschnitzel oberhalb eines solchen Trichters zu dem zentralen Kern hingeleitet, und der Druck im Bereich der oberen Durchbrechungen wird erhöht.

Wenn die Mantelfläche des zentralen, mantelförmigen Kerns des Holzgaskessels oberhalb des glocken- oder trichterförmigen oder konischen Körpers von einem Filter umgeben ist, insbesondere von einem Grobfilter, so werden die jenen Filter passierenden Holzschnitzel oder sonstigen Partikel zu einem Großteil unmittelbar dem zentralen Kern zugeleitet und von jenem gleichmäßig wieder in das Glutbett abgegeben.

Ferner liegt es im Rahmen der Erfindung, dass der zentrale, mantelförmige Kern des Holzgaskessels auch an seinem oberen Ende abgeschlossen oder stabilisiert bzw. versteift ist, bevorzugt von einer kreisförmigen, mehreckigen und/oder ringförmigen oberen Stirnwand. Eine flache, scheibenförmige Gestalt dieser oberen Stirnwand erhöht die Steifigkeit der Anordnung gegenüber mechanischen Beanspruchungen.

Schließlich kann nicht nur in dem Bereich des Glutraums eine Verklumpung eintreten, sondern auch oberhalb dieses Bereichs, insbesondere oberhalb eines zentralen Bereichs, der durch eine Trennwand im unteren Bereich des Kessels geschaffen und von einem peripheren Bereich des Kessels abgetrennt ist. Deshalb sieht die Erfindung einen zentralen Kondensatabweiser vor, die einen zentralen Bereich innerhalb des Kessels überdeckt und die dortige Ablagerung von Holzschnitzeln und/oder Holzkohle vermeiden soll.

Die oberseitige, kreisförmige, mehreckige und/oder ringförmige Stirnwand bietet insbesondere die Möglichkeit, den Kondensatabweiser dort aufzusetzen. insbesondere kann der Umfangsrand eines solchen Kondensatabweiser rundum auf der oberen Stirnwand des zentralen Kerns aufsitzen und dadurch vor einem Kippen bewahrt werden.

Eine Geometrie mit einer im Mittelbereich nach oben gewölbten Oberseite des Kondensatabweisers trägt dazu bei, dass niedergeschlagenes, aber noch fließfähiges Holzgaskondensat entlang des Kondensatabweisers nach unten und dabei auch radial nach außen fließt, also in Bereiche mit einer höheren Temperatur, wo das Holzgaskondensat gecrackt werden kann und dadurch gasförmig wird.

Eine konkrete Ausgestaltung des erfindungsgemäßen Kondensatabweisers sieht vor, dass jener eine kalotten-, hauben-, mützen- oder kegelförmige Gestalt aufweist. Diese Formen erfüllen die Voraussetzung eines erhabenen Mittelbereichs und einer von dort zur Peripherie des Kondensatabweisers hin kontinuierlich abfallenden Oberseite und sind daher in der Lage, im Fall eines Holzgaskondensat-Niederschlags jenen aufgrund der Gewichtskraft nach außen abzuleiten in Bereiche des Holzgaskessels, wo höhere Temperaturen zu einem Cracken des Holzgaskondensat-Niederschlagsführen.

Indem dieser Kondensatabweiser einen zentralen Bereich innerhalb des Holzgaskessels überdeckt, kann sich an der glatten Oberfläche des Kondensatabweisers keine Verklumpung ausbilden; vielmehr wird dort entstehendes Holzgaskondensat entlang einer geneigten Fläche zu peripheren Bereichen des Holzgaskessels hin abgeleitet, wobei das Holzgaskondensat außerdem gecrackt wird. Damit wird die Ausbildung eines Verklumpungskerns verhindert, von wo sich eine Verklumpung ausbreiten könnte.

Insbesondere sollte der Kondensatabweiser den besagten zentralen, mantelförmigen Kern des Holzgaskessels und/oder dessen obere, kreisförmige, mehreckige und/oder ringförmige Stirnwand an dessen Peripherie vollständig überdecken, damit sich dort kein Holzgaskondensat niederschlagen kann.

Es hat sich als günstig erwiesen, dass der Kondensatabweiser einen eine zentrale Achse des Holzgaskessels umgebenden, flächigen oder ringförmigen Bereich mit einer geschlossenen Oberfläche aufweist. Im eigentlichen Zentrum wird der Kondensatabweiser bevorzugt von einer zentralen, vertikalen Achse des Holzgaskessels durchsetzt, woraus die bevorzugte ringform resultiert.

Der flächigen oder ringförmige Bereich des Kondensatabweisers mit einer geschlossenen Oberfläche sollte eine punkt- oder rotationssymmetrische Gestalt aufweisten, so dass er sich kräftemäßig in einem Gleichgewicht befindet und eine Fixierung mit moderatem Aufwand möglich ist.

Es liegt im Rahmen der Erfindung, dass der flächige oder ringförmige Bereich mit einer geschlossenen Oberfläche nahe seinem Zentrum oder seines inneren Randes erhaben ist gegenüber seiner Peripherie oder seines äußeren Randes. Eine im Mittelbereich nach oben gewölbte Oberseite des Kondensatabweisers trägt dazu bei, dass niedergeschlagenes, aber noch fließfähiges Holzgaskondensat entlang des Kondensatabweisers nach unten und dabei auch radial nach außen fließt, also in Bereiche mit einer höheren Temperatur, wo das Holzgaskondensat gecrackt werden kann und dadurch gasförmig wird.

Weitere Vorzüge ergeben sich daraus, dass der Außendurchmesser des Kondensatabweisers oder von dessen ringförmigem Bereich einem Drittel des Kesseldurchmessers im Bereich der oberen Kesselwand entspricht oder mehr. Damit kann eine entsprechend große Oberfläche im Bereich des Kesselzentrums vor einem unerwünschten Niederschlag von Holzgaskondensat geschützt werden.

Auf einem Niveau unterhalb des Kondensatabweisers kann ein Filter angeordnet sein, vorzugsweise ein ringförmiger Filter, insbesondere ein Grobfilter zur Zurückhaltung größerer Holz- oder Kohlestücke. Da ein derartiger, sich vorzugsweise horizontal erstreckender Filter sowohl die Luft- und Gaszirkulation beeinträchtigt, insbesondere zwischen einem Bereich oberhalb des Filters und einem Bereich darunter, als auch den Einfluss von Wärmestrahlung, ist ein Bereich oberhalb dieses Filters üblicherweise kälter als der Bereich des Holzgaskessels unterhalb eines solchen Filters. Dies wiederum hat zur Folge, dass in dem Bereich oberhalb eines solchen Filters die Gefahr eines Niederschlags von Holzkondensat signifikant erhöht ist; aus diesem Grund sollte ein erfindungsgemäßer Kondensatabweiser ebenfalls oberhalb eines solchen Filters angeordnet werden.

Die Erfindung empfiehlt, den Kondensatabweiser an seinem Außenumfang mit wenigstens einem etwa radial zu einer vertikalen Symmetrieachse des Holzgaskessels auskragenden Fortsatz zu versehen, der dazu dienen kann, Verunreinigungen von der Oberseite des darunter liegenden Filters abzuschaben oder abzukratzen.

Um diese Aufgabe des Abschabens von Verunreinigungen von der Oberseite des darunter liegenden Filters erfüllen zu können, sollte der Kondensatabweiser eine andere Umdrehungsgeschwindigkeit aufweisen als der darunter angeordnete Filter, beispielsweise eine entgegengesetzt gerichtete Umdrehungsgeschwindigkeit.

Eine definierte Vorgabe des Drehwinkels und/oder der Drehgeschwindigkeit des Kondensatabweisers wird dadurch ermöglicht, dass der Kondensatabweiser im Bereich seines Zentrums oder des inneren Randes seines ringförmigen Bereichs drehfest mit einer vertikalen Achse gekoppelt ist und von dieser vertikalen Achse in Drehrichtung festgelegt oder angetrieben wird. Während für eine Veränderung des Drehwinkels ein Antrieb erforderlich ist, genügt für die Vorgabe eines konstanten Drehwinkels eine Festlegung der vertikalen Achse.

Die Erfindung lässt sich dahingehend weiterbilden, dass der Kondensatabweiser über seinen ringförmigen Bereich auf einer darunter befindlichen Konstruktion aufsitzt und von dieser getragen und/oder in seiner Lage stabilisiert wird, insbesondere auf dem besagten zentralen Kern oder einer oberen Stirnfläche desselben. Eine solche Abstützung kann von Vorteil sein, falls der Kondensatabweiser während des Betriebs des Holzgaskessels. das Gewicht einer höheren Schicht eingefüllter Holzschnitzel tragen muss.

Um eine gute Umsetzung der Holzschnitzel in Holzgas zu gewährleisten, ohne dass diese verbrennen, sollte der Holzgaskessel oben eine für den Einlass von den Holzschnitzeln bestimmte Eintrittsschleuse besitzen, die einen luftdichten Abschluss ermöglicht.

Von besonderer Bedeutung ist es, dass die Versorgung mit Luft in der Glutzone bezüglich der erwähnten Zentralachse im wesentlichen gleichmäßig erfolgt. Dies wird beispielsweise auf einfache Art dadurch erreicht, dass das Glutbett in einem Glutraum mit im wesentlichen zylindrischer Wand liegt, in der eine Anzahl von Luftdüsen verteilt angeordnet ist.

Knapp oberhalb des Kesselbodens kann am unteren Teilstück des Lagerrohrs ein sich mitdrehender Ascheräumer zum Räumen der niedergefallenen Asche in Richtung auf eine Asche-Durchtrittsöffnung befestigt sein. Dieser Ascheräumer kann spinnenartig ausgebildet sein und eine Anzahl von beabstandeten Räumstäben, z. B. runden, rechteckigen oder L-förmigen Querschnitts, besitzen.

Natürlich muss die erzeugte Asche von Zeit zu Zeit aus dem Holzgaskessel entfernt werden. Demgemäß sollte der Kesselboden mit einer Asche-Durchtrittsöffnung versehen sein, unter der eine Einrichtung zum Abtransport der durchgefallenen Asche, also beispielsweise ein Asche-Behälter, angeordnet ist. Diese Einrichtung sollte auch zweckmäßigerweise eine Transportschnecke umfassen.

Weitere Merkmale, Eigenschaften, Vorteile und Wirkungen auf der Basis der Erfindung ergeben sich aus der folgenden Beschreibung einiger bevorzugter Ausführungsbeispiele der Erfindung sowie an Hand der Zeichnung. Hierbei zeigt:

Fig. 1 einen Vertikalschnitt durch einen erfindungsgemäßen Holzgaskessel, mit einem unteren, vorzugsweise zylindrischen Kesselgehäuse und einer darauf gesetzten oberen Kesselwand mit einer ebenfalls zylindrischen Geometrie, die jedoch gegenüber dem Kesselgehäuse verjüngt ist, woraus verschiedene Einbauten des Holzgaskessels erkennbar sind, insbesondere ein drehbarer Kern und ein drehbarer Einsatz;

Fig. 2 eine gegenüber der Fig. 1 leicht abgewandelte Ausführungsform der Erfindung, wobei die Einbauten innerhalb des unteren Kesselgehäuses bei abgenommener oberer Kesselwand in einer perspektivischen Ansicht schräg von oben erkennbar sind, insbesondere der drehbare Kern und der drehbare Einsatz mit einer Mehrzahl von radial verlaufenden Profilkörpern;

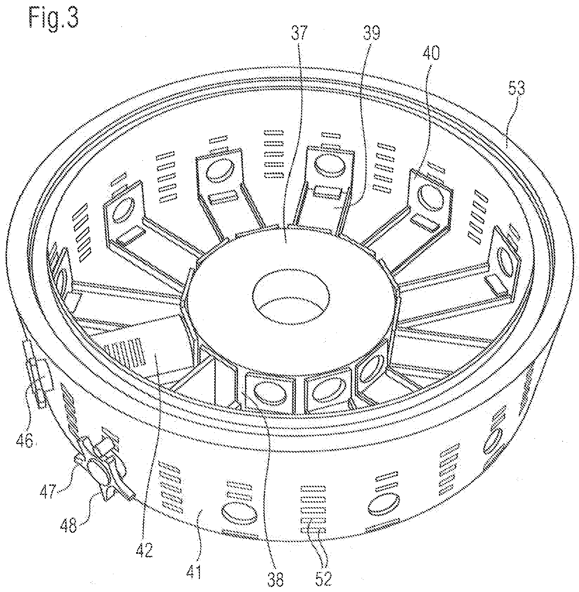

Fig. 3 den drehbaren Einsatz aus Fig. 2 in ausgebautem Zustand und bei entfernten Profilkörpern, perspektivisch von oben gesehen;

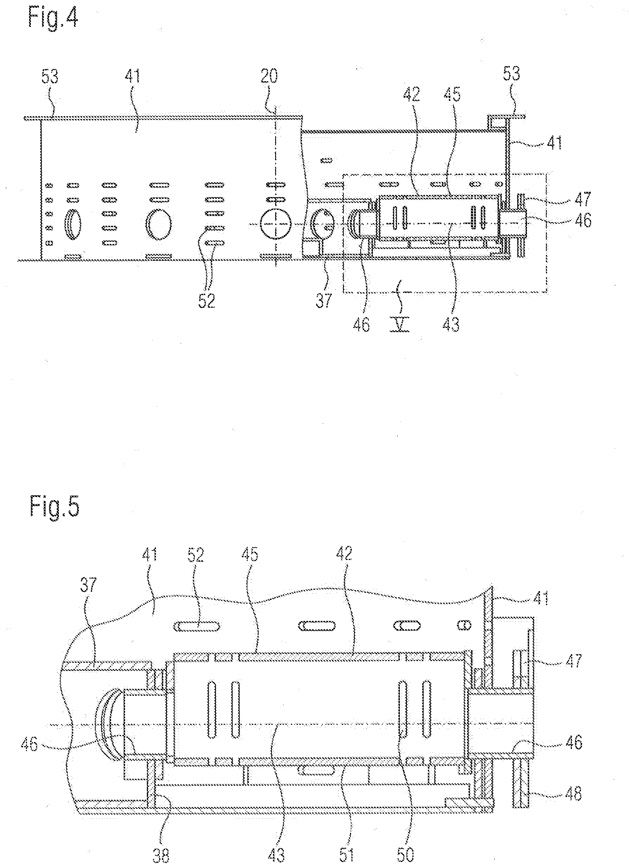

Fig. 4 eine Seitenansicht auf den drehbaren Einsatz nach Fig. 3 mit eingebauten Profilkörpern, teilweise aufgeschnitten;

Fig. 5 das Detail V aus Fig. 4 in einer vergrößerten Darstellung;

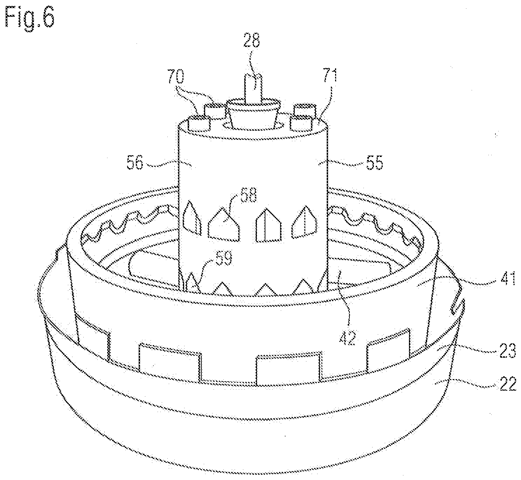

Fig. 6 eine perspektivische Ansicht auf eine Baugruppe aus dem Inneren des Holzgaskessels nach Fig. 1, umfassend den drehbaren Kern und den drehbaren Einsatz sowie den eine nach oben gebogene Umrandung des Ascherostes;

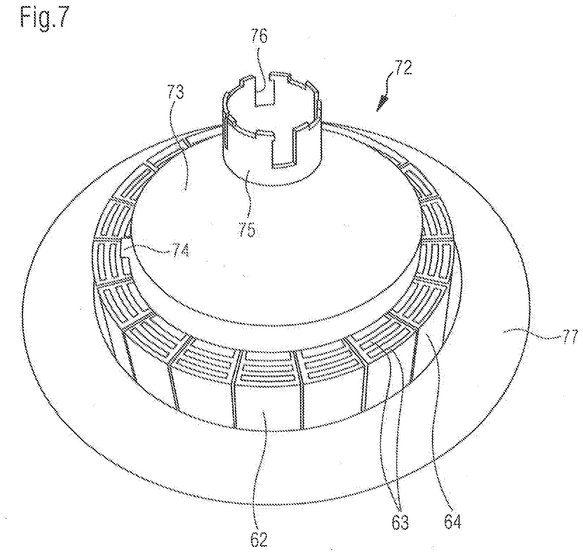

Fig. 7 einen auf dem Kern nach Fig. 6 applizierbaren Grobfilter zum Rückhalten größerer Holzkohlestücke sowie eine auf diesen Grobfilter aufsetzbare Abdeckung in Form eines Kondensatabweisers, ebenfalls in einer perspektivischen Ansicht;

Fig. 8 einen Vertikalschnitt durch ein ringförmig gebogenes Dichtungsteil zur Abdichtung eines rundum laufenden Spaltes zwischen der oberen Kesselwand einerseits und dem drehbaren Einsatz gemäß Fig. 2 andererseits, eingebaut in den Holzgaskessel;

Fig. 9    einen Draufsicht auf die Fig. 8 in Richtung des Pfeils IX, mit dem in den Holzgaskessel eingebauten Dichtungsteil; sowie

Fig. 10   eine Vergrößerung des Details X aus Fig. 8.

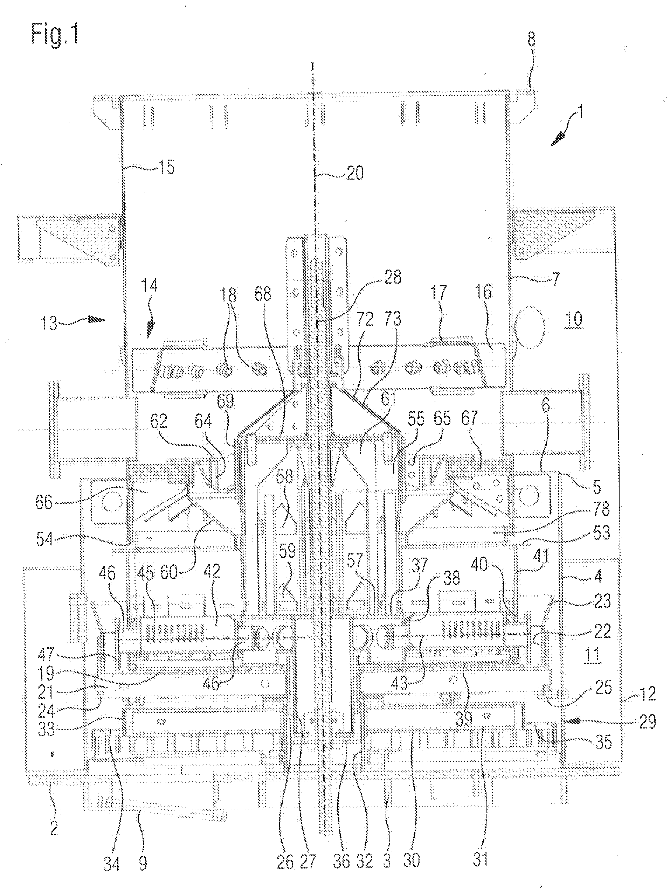

Gemäß Fig. 1 besitzt ein erfindungsgemäßer Holzgaskessel 1 einen etwa vertikalen Durchlaufstrom und wird dabei von oben mit Holzschnitzeln beschickt, während an seinem unteren Ende Asche entnommen wird. Dazwischen kann das entstehende Prozessgas abgezogen werden.

Damit ein kontinuierlicher Prozess möglich ist, muss einerseits Sorge dafür getragen werden, dass eine regelmäßige Beschickung möglich ist, ohne dass dabei das Prozessgas unkontrolliert entweichen kann, und andererseits dafür, dass beständig bzw. in regelmäßigen Zeitabständen Asche ausgeräumt wird. Wie oben bereits angedeutet, soll auch darauf geachtet werden, dass sich innerhalb des Holzgaskessels 1 möglichst kein Holzgaskondensat bzw. Teer niederschlägt.

Um das entstehende Prozessgas definiert abziehen zu können, ist der erfindungsgemäße Holzgaskessel 1 nach außen abgeschlossen mehr oder weniger luftdicht.

Hierzu verfügt der Holzgaskessel 1 über einen Kesselboden 2, bspw. in Form einer Stahlplatte, die durch einen unterseitigen Rahmen oder unterseitig angeschweißte Stege 3 ausgesteift sein kann. Über diesem Kesselboden 2 erhebt sich ein unterer Kesselmantel 4, vorzugsweise von zylindrischer Gestalt. Dieser Kesselmantel 4 reicht jedoch nicht unmittelbar bis zum oberen Ende des Holzgaskessels 1, sondern ist an seinem oberen Rand 5 über einen dortigen, nach innen gerichteten Flansch 6 luftdicht mit einer radial nach innen zurückversetzten Kesselwand 7 verbunden, die sich weiter nach oben erstreckt bis zu dem oberen Ende des Holzgaskessels 1. Bevorzugt ist dort eine Befestigungsmöglichkeit für einen Kesseldeckel vorgesehen, bevorzugt in Form eines rundum laufenden Flansches 8.

Mit dem Kesseldeckel kann eine Beschickungs- oder Zuführschleuse integriert oder verbunden sein, über welche Holzschnitzel von oben in den Holzgaskessel 1 eingefüllt werden können, ohne dass dabei das Prozessgas unkontrolliert entweichen kann.

Eine Entnahmeöffnung 9 im Kesselboden 2 erlaubt es, in regelmäßigen Zeitabständen Asche aus dem Holzgaskessel 1 auszuräumen.

Die Beschickung mit Luft oder einem anderen Oxidationsmittel sowie der Abzug des entstehenden Prozessgases erfolgt über in der Zeichnung nicht dargestellte Rohrstutzen an der Kesselwand 7 und/oder an dem Kesselmantel 4.

Die Gestalt des Holzgaskessels 1 ist vorzugsweise rotationssymmetrisch oder prismatisch, beispielsweise mit einem horizontalen Querschnitt in Form eines Kreises oder eines Mehrecks, insbesondere eines regelmäßigen Vierecks.

Bspw. zum Zwecke einer thermischen Isolation kann der Kesselmantel 4 und/oder die Kesselwand 7 außen von einem oder mehreren Ringräumen 10, 11 umgeben sein, die von einer Außenwand 12 nach außen abgegrenzt wird. Bevorzugt sitzt die Außenwand 12 auf einem das Kesselgehäuse 4 nach außen überragenden Rand des Kesselbodens 2 auf und wird von jenem getragen.

Zusätzlich zu dem bis hier beschriebenen Kesselgehäuse 13 des Holzgaskessels 1 verfügt dieser über verschiedene Einbauten, welche vornehmlich dem Zweck dienen, einen Dauerbetrieb mit einer möglichst konstanten Prozessgas-Ausbeute zu ermöglichen.

So wie die bis hierhin beschriebenen Bestandteile des Holzgaskessels 1 starr und unbeweglich sind, gibt es auch ebenso starre und unbewegliche Einbauten. In diesem Zusammenhang ist einerseits eine Luftzuführung 14 zu erwähnen, die sich etwa auf halber Höhe der Kesselwand 7 an deren Innenseite 15 befindet. Es handelt sich hierbei um einen rundum laufenden ringförmigen Luftkanal 16 für die Zuführung von Luft. Dieser ringförmige Luftkanal 16 kann mittels Klammern 17 oder sonstiger Tragelemente an der Innenseite 15 des Holzgaskessels 1 gehalten sein. Bevorzugt hat dieser rundum laufende Luftkanal 16 einen rechteckigen oder trapezförmigen Querschnitt, vorzugsweise mit einem trapezförmigen Querschnitt, der sich von unten nach oben erweitert, so dass die radial innen liegende Seite 17 dieses Luftkanals 16 einem konischen Verlauf folgt entlang eines sich nach oben verjüngenden Kegelstumpfs. An eben dieser bevorzugt konischen Innenseite 17 des ringförmigen Luftkanals 16 befinden sich kranzförmig verteilt angeordnete Ausströmöffnungen oder Ausströmdüsen 18. Aufgrund des bevorzugt konischen Verlaufs eben dieser Innenseite 17 sind diese Ausströmdüsen 18 in einem gewissen Grad nach unten geneigt, so dass die zugeführte Luft nach unten ausgeblasen wird.

Ein weiterer, starrer bzw. unbeweglicher Einbau innerhalb des Holzgaskessels 1 ist ein ringförmiger Ascherost 19, der auf einem Unterbau aus von einer zentralen Symmetrieachse 20 etwa radial nach außen strebenden Tragarmen 21 aufliegt. Diese Tragarme 21 können mit einer den Ascherost 19 außen ringförmig umgebenden, sich überwiegend nach oben erstreckenden Schürze 22 verbunden sein, die sich in ihrem oberen Bereich 23 in konischer Form nach außen erweitern kann. Die Unterkante 24 dieser Schürze 22 liegt bevorzugt auf stummelförmigen Tragelementen 25 auf, welche in dem Kesselgehäuse 4 verankert sind, vorzugsweise in äquidistanten Abständen.

Die radial innen liegenden Enden der Tragarme 21 sind - nach Art der Verbindung der Speichen eines Rades mit einer zentralen Nabe - mit einer Hülse 26 verbunden, die ihrerseits als Führung für ein zylinderförmiges Teil 27 im

Zentrum des Holzgaskessels 1 dienen kann. Das zylinderförmge Teil 27 erstreckt sich durch die zentrale Ausnehmung in dem ringförmigen Ascherost 19 nach oben und umgibt seinerseits eine entlang der vertikalen Symmetrieachse 20 des Holzgaskessels 1 von dem Kesselboden 2 nach oben ragende Achse 28. Diese Achse 28 ist bevorzugt in dem Keselboden 2 unverdrehbar fixiert, kann jedoch bei speziellen Ausführungsformen auch um ihre Längsachse bzw. um die Symmetrieachse 20 drehbar gelagert sein.

Im Gegensatz zu den soeben beschriebenen, unverdrehbaren Einbauten wie der Luftzuführung 14, dem Ascherost 19 sowie ggf. der vertikalen Achse 28 ist das zylinderförmige Teil 27 bevorzugt um die vertikale Symmetrieachse 20 des Holzgaskessels 1 drehbar. Seinen Drehantrieb erhält dieses Teil 27 über eine Dreheinrichtung 29 unterhalb der Tragarme 21.

Diese Dreheinrichtung 29 ist bevorzugt mit einem Ascheräumer 30 inetgriert, der bei einer Drehung die unterste Schicht an Asche allmählich der dezentral bzw. exzentrisch in dem Kesselboden 2 angeordneten Entnahmeöffnung 9 zuführt. Dieser Ascheräumer 30 umfasst mehrere in einer horizontalen Ebene radial nach außen strebende Stäbe oder Rohre 31, die mit einer radial innen liegenden Hülse 32 verbunden sind, vorzugsweise verschweißt. Die Hülse 32 ist in einer ringförmigen Vertiefung auf der Oberseite des Kesselbodens 2 nach Art eines Gleitlagers um die vertikale Symmetrieachse 20 drehbar gelagert. Mit den Stäben oder Rohren 31 des Ascheräumers 30 ist eine durchbrochene Haube 33 drehfest verbunden, die ihrerseits Im Bereich der peripheren Enden der Stäbe oder Rohre 31 mit einer kranzförmigen Reihe von Löchern 34 versehen ist, und zwar derart, dass die verbleibenden Stege 35 zwischen diesen Löchern 34 nach Art eines Zahnkranzes für den Eingriff eines Antriebsmittels geeignet sind. Als darin eingreifendes Antriebsmittel kann einerseits ein in der Zeichnung nicht dargestelltes Ritzel od. dgl. verzahntes Rad dienen, welches in regelmäßigen Zeitabständen um einen bestimmten Winkel weiter gedreht wird, oder ein hakenförmiges Antriebsmittel, welches in regelmäßigen Zeitabständen nach vorne geschoben wird, bis der Haken in ein freies Loch 34 eingreift, und sodann zurückgezogen wird, um den Ascheräumer 30 weiter zu drehen. Die Hülse 32 ist über eine nach innen reichende Platte 36 drehfest mit dem zylinderförmigen Teil 27 verbunden.

Das derart drehangetriebene, zylinderförmige Teil 27 ist seinerseits drehfest mit einem nabenförmigen Teil 37 - welches gemäß beigefügter Zeichnung auch hohl ausgebildet sein kann - verbunden und weist eine zylinderförmige Außenseite 38 auf. Jenseits dieser zylindermantelförmigen Außenseite 38 ragen mehrere Bleche 39 in einer horizontalen Ebene flach radial nach außen. Die peripheren Enden 40 dieser Bleche 39 sind vertikal nach oben umgebogen und mit einem peripheren, sich schürzenförmig nach oben erstreckenden Zylindermantel 41 verbunden.

Zwischen der zylinderförmigen Außenseite 38 des nabenförmigen Teils 37 und dem peripheren Zylindermantel 41 erstrecken sich nach Art von radialen Speichen mehrere profilförmige Elemente oder Flügel 42 mit jeweils radial zu der zentralen Symmetrieachse 20 verlaufenden Längsachsen 43. Bevorzugt erstreckt sich je ein profilförmiges Element 42 parallel zu bzw. oberhalb von einem radialen Blech 39, so dass sich insgesamt die Gestalt eines Sterns 44 aus Flügeln 42 ergibt.

Die profilförmigen Elemente oder Flügel 42 sind bevorzugt jeweils hohl ausgebildet, vorzugsweise mit je einem radial erweiterten Mittelabschnitt 45 und demgegenüber querschnittlich verjüngten Lagerfortsätzen oder Achsstummeln 46 an beiden Enden. Diese Achsstummel 46 sind in je einer Bohrung in dem betreffenden Blech 39 und/oder in dem nabenförmigen Teil 37 und/oder in dem peripheren Zylindermantel 41 gelagert, vorzugsweise nach Art eines Gleitlagers.

An dem radial außen liegenden Achsstummel 46 ist je eine Verzahnung 47 - bspw. in Form eines Sterns oder eines Zahnrads - befestigt, dessen Strahlen bzw. Zähne 48 bei einer Drehung des peripheren Zylindermantels 41 mit Fingern 49 oder sonstigen Hindernissen an oder innerhalb der mit dem Ascherost 19 verbundenen Schürze 22 in Kontakt gelangen und von jenen um je eine Zahn- oder Strahlenteilung der Verzahnung 47 weiterbewegt werden.

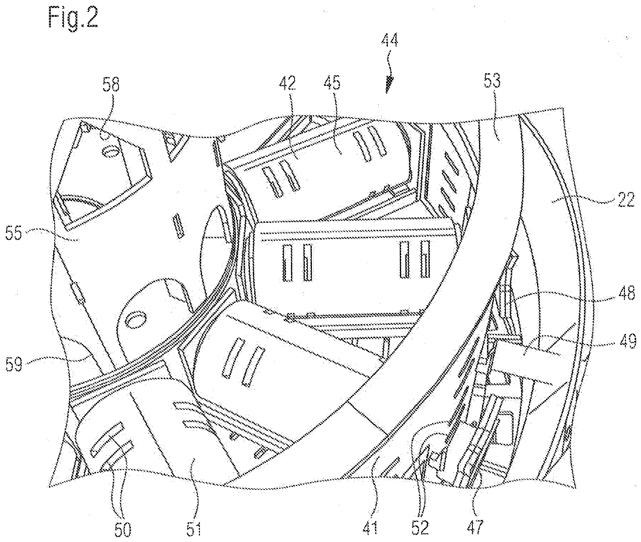

Fig. 2 zeigt, dass die einzelnen Flügel 42 des um eine vertikale Achse drehbaren Sterns 44 ihrerseits drehbar ausgebildet sind, und zwar um ihre jeweilige Längachse 43. Dazu hat jeder Flügel 42 einen Mittelabschnitt 45, der sich zwischen dem zentralen Kern 55 einerseits und der peripheren Einfassung 41 andererseits erstreckt, aber jeweils vor dem betreffenden Element 55, 41 sich verjüngt zu je einem Lagerungsfortsatz 46, der in dem betreffenden Element 55, 41 drehbar gelagert ist, insbesondere nach Art eines Reiblagers. Der äußere Lagerungsfortsatz 46 kann eine entsprechende Lagerungsausnehmung in der Einfassung 41 durchgreifen. Außerhalb der Einfassung 41 trägt der äußere Lagerungsfortsatz 46 eine sternförmige Verzahnung 47, die unbeweglich, d.h. drehfest, mit dem Lagerungsfortsatz 46 verbunden ist. Infolge der Drehung des Sterns 44 gelangt die sternförmige Verzahnung 47 jedes Flügels 42 nacheinander zu einem gewissen Zeitpunkt in den Bereich eines feststehenden Fingers 49, der beispielsweise an der nach oben ragenden Schürze 22 des Ascherosts 19 in nach radial innen ragender Weise befestigt ist. Beim Weiterdrehen des Sterns 44 gelangt dieser Finger 49 sodann regelmäßig mit einer Verzahnung 47 eines Flügels 42 in Kontakt und bewirkt ein Verschwenken des betreffenden Flügels 42 um einen Winkel, welcher der Winkelteilung der sternförmigen Verzahnung 47 entspricht, also bei einer sternförmigen Verzahnung 47 mit k Spitzen oder Zähnen 48 um einen Winkel $\alpha$ von jeweils $\alpha = 360° / k$.

Wie man der Zeichnung weiter entnehmen kann, kann ein Flügel 42 als Profil in seinem Mittelabschnitt 45 mit einem konstanten Querschnitt ausgebildet sein; andere Ausführungen sind jedoch denkbar; beispielsweise kann sich der Querschnitt des Mittelabschnitts 45 ändern; der Mittelabschnitt 45 könnte z.B. aus mehreren Scheiben mit unterschiedlichen Geometrien zusammengesetzt sein, etc. Die Mittelabschnitte 45 der profilförmigen Elemente 42 können jeweils eine zylinder- oder prismenförmige Gestalt aufweisen, beispielsweise mit einem kreisförmigen Querschnitt oder einem mehreckigen Querschnitt.

Ferner ist ein Flügel 42 in seinem Mittelabschnitt 45 bevorzugt hohl ausgebildet; dieser kanalförmige Hohlraum kann sich auch bis in die Lagerungsfortsätze 46 hinein erstrecken. Sofern der Mantel 51 eines hohl ausgebildeten Mittelabschnitts 46 Öffnungen 50 aufweist, beispielsweise schlitzförmige Öffnungen 50, so kann das Holzgas durch diese Öffnungen 50 in den internen Kanal des Flügels 42 eintreten und beispielsweise an dem außenliegenden Ende eines Lagerungsfortsatzes 46 außerhalb der Einfassung 41 wieder austreten, von wo es dann mittels Unterdruck abgesaugt werden kann. Eine Reihe solcher Öffnungen 50 in der Mantelfläche 51 des Mittelabschnitts 45 jedes profilförmigen Elements oder Flügels 42 erlaubt den Eintritt von Prozessgas aus dem Glutbett. Dieses Prozessgas kann innerhalb des jeweiligen profilförmigen Elements oder Flügels 42 entweder radial nach innen oder radial nach außen weiter geleitet werden.

Dabei sorgt die Drehbewegung der profilförmigen Elemente oder Flügel 42 dafür, dass sich die mantelseitigen Öffnungen 50 nicht zusetzen können. Insbesondere bei einem prismatischen Profilkörper 42 kann die Drehbewegung außerdem dafür sorgen, dass verbleibende Stückchen in der Asche in dem Glutbett zerrieben werden, und/oder dass die Asche durch den Ascherost 19. hindurch befördert wird. Dabei können die Kanten eines derartigen prismatischen Profilkörpers 42 als Abstreifkanten dienen, um auf dem Rost 19 liegende Asche abzustreifen.

Der Zylindermantel 41 kann mit zusätzlichen Öffnungen 52 versehen sein, durch welche ebenfalls Prozessgas nach außen entweichen kann.

Zwischen der Oberkante 53 des Zylindermantels 41 und der Unterkante 54 der zylindrischen Kesselwand 7 verbleibt ein kleiner Spalt als Spielraum, der eine Relativverdrehung zwischen diesen beiden Elementen erlaubt. Dieser Spalt kann abgedichtet sein, bspw. durch eine Labyrinthdichtung, damit hier möglichst keine Luft entweichen kann und nur im unteren Bereich des Glutbettes das möglichst reine Prozessgas nach außen abgezogen werden kann.

Innerhalb des Holzgaskessels 1 besteht während des Betriebs auf einer horizontalen Ebene ein Temperaturgefälle von radial außen nach innen, d.h., die höchste Temperatur herrscht nahe der Kesselwand 7, und nahe der Symmetrieachse 20 sind die Temperaturen am niedrigsten. Dort, also nahe der zentralen Symmetrieachse des Holzgaskessels 1, könnte die Vergasung demnach unvollständig ablaufen - mehr noch, in und nahe diesen zentralen Bereichen könnte sich teerartiges Holzgaskondensat niederschlagen und den weiteren Fortschritt des Vergasungsprozesses behindern, so dass ein Betriebszyklus zwischen zwei Wartungs- und Reinigungsarbeiten verkürzt würde. Aus diesem Grunde ist vorgesehen, dass im zentralen Bereich des Holzgaskessels 1 möglichst keine Vergasung stattfindet. Aus diesem Grund ist in dem Holzgaskessel 1 ein zentraler Kern 55 vorgesehen, welcher dort den Vergasungsprozess möglichst unterbinden soll.

Der zentrale Kern 55 hat die Gestalt eines vertikalen Zylindermantels 56 mit einer zu der Symmetrieachse 20 koaxialen Längsachse und einem horizontalen Boden 57, der oben auf dem drehangetriebenen, hülsenförmigen Teil 27 aufsitzt und mit jenem drehfest verbunden ist. Der Kern 55 dreht sich also mit dem Stern 44 aus radialen profilförmigen Elementen oder Flügeln 42 synchron mit. Der zentrale Kern 55 dient als eine Art durchbrochener Trennwand 56 und hat zu diesem Zweck eine beispielsweise zylindrische oder prismatische Gestalt, die einen zentralen Bereich des Holzgaskessels 1 von einem peripheren Bereich desselben zumindest teilweise abtrennt.

Dieser mantelförmige Kern 55 verfügt über zwei Ebenen mit jeweils kranzförmig angeordneten Durchbrechungen 58, 59. Wie man der Zeichnung weiter entnehmen kann, weist der Zylindermantel 56 mehrere Durchbrechungen 58, 59 auf. insbesondere gibt es eine obere, rundum laufende Reihe mit mehreren Durchbrechungen 58 und eine untere, ebenfalls rundum laufende Reihe mit mehreren Durchbrechungen 59.

Die Geometrie dieser Durchbrechungen 58, 59 kann weitgehend beliebig gewählt werden; jede Durchbrechung 58, 59 kann beispielsweise nach Art eines drei-, vier- oder fünfeckigen Fensters oder eines bogenförmigen Fensters gestaltet sein. Bevorzugt ist die Breite eines Fensters in dessen unterem Bereich konstant und verjüngt sich dann nach oben hin kontinuierlich. Bei der Ausführungsform gemäß Fig. 2 haben die oberen Durchbrechungen 58 eine fünfeckige Geometrie, die unteren Durchbrechungen 59 dagegen eine Geomerie ähnlich eines Bogen-Durchgangs.

Auf einem Niveau zwischen der oberen Reihe von Durchbrechungen 58 und der unteren Reihe von Durchbrechungen 59 ist die Außenseite bzw. der Mantel 56 des Kerns 51 von einem ein trichterförmigen Element 60 umgeben. Das trichterförmige Element 60 kann mit seinem peripheren Rand auf den Stegen 66 aufliegen.

Das trichterförmige Element 60 erstreckt sich von dort nach oben und erweitert sich dabei von unten nach oben konisch und führt daher von oben aufgegebene Holzschnitzel radial nach innen zu der oberen Reihe von Durchbrechungen 58, wo die Holzschnitzel dann in den Kern 55 hineingelangeri und von dort durch dessen untere Reihe von Durchbrechungen 59 schließlich wieder radial nach außen in das eigentliche Glutbett. Der Kern 55 weist vorzugsweise an seiner Innenseite nach innen vorspringende Rippen 61 auf. Der innere Bereich innerhalb des Trichters bildet somit quasi eine Art Bypass zu einem ggf. zugesetzten peripheren Bereich innerhalb des Holzgaskessels 1 und erlaubt dem Holzgas samt mitgeführter Holzkohle- oder -aschepartikel, sich einen Weg zu nicht zugesetzten unteren Durchbrechungen 59 zu suchen und dort den zentralen Kern 55 wieder in radialer Richtung zu verlassen und von dort zu dem Rost 19 zu gelangen, während das Holzgas seinen Weg durch die Öffnungen 50 in die internen Kanäle innerhalb der Flügel 42 suchen und beispielsweise an den außenliegenden Enden der Lagerungsfortsätze 46 außerhalb der Einfassung 41 wieder austreten kann. Damit soll auch eine lokale Verdichtung des Brenngutes vermieden werden und damit der Gefahr einer lokal unvollständigen Verbrennung in Ermangelung ausreichender Gaszu- oder -abfuhr vorgebeugt werden. Dies erfolgt insbesondere mit dem Ziel, eine inhomogene Temperaturverteilung mit kühlen Stellen zu vermeiden, an welchen vermehrt Holzgaskondensat niedergeschlagen würde.

Der zentrale Kern 55 kann oben durch eine ringförmige Oberseite 71 teilweise abgeschlossen sein, auf den eine Haube 68 mit einem ringförmigen Grobfilter 62 aufgesetzt werden kann. Diese Oberseite 71 kann mit beispielsweise vier Aufnahmen 70 zum Einstecken von Stiften 69 an der Unterseite der Haube 68 versehen sein. Der Grobfilter 62 ist oberhalb des an der Außenseite 56 des Kerns 55 angesetzten, trichterförmigen Elements 60 angeordnet und soll das Eintreten zu großer Holzschnitzel in den Bereich des Glutbettes verhindern.

Dieser Grobfilter 62 weist eine größere Anzahl von vertikalen Stegen 63 und dazwischen liegenden Kanälen auf, welche einen zentralen Bereich der Haube 68, der dem Aufsetzen auf die Oberseite 71 des Kerns 55 dient, ringförmig umgebend angeordnet sind. Diese Kanäle begrenzen mit ihrem Querschnitt die Größe von hindurchtretenden Holzkohlestücken auf Partikeldurchmesser von beispielsweise etwa 1 bis 2 cm. Die ringförmigen Stege 63 verlaufen dazu in einem geringen radialen Abstand von beispielsweise 1 bis 3 cm konzentrisch zueinander und werden bspw. durch radiale Stege 65 auf Abstand gehalten. Die Spaltbreite der ringförmigen Hohlräume zwischen diesen Stegen 63 sowie zwischen dem äußersten Steg 63 und einer äußeren Einfassung 64 definiert eine maximale Abmessung von Holzschnitzeln, welche da hindurch gelangen können.

Diese Stege 63, 64 können sich entweder mit dem Kern 55 mit drehen oder an der Kesselwand 7 verankert sein, beispielsweise über radial nach innen ragende Stege 66. Es ist auch denkbar, dass sich radial innen liegende Stege 63 dank ihrer an der Mantelfläche 56 des Kerns 55 verankerten Haltestege 65 mitdrehen, während radial weiter außen liegende Stege 64 des Grobfilters 62 an der Kesselwand 7 verankert sind und sich also nicht mitdrehen, so dass zwischen zwei sich gegenüber liegenden Stegen 63, 64 eine Relativverdrehung stattfindet und zu große Holzschnitzel dadurch zerrieben werden.

Von der Kesselwand 7 nach innen ragende Stege 66 können auch dazu dienen, einen Ring aus Schamotte-Steinen 67 zu tragen, der sich von der Kesselwand 7 bis zu dem Grobfilter 62 erstreckt, so dass keine Holzschnitzel an dem Grobfilter 62 vorbei strömen können.

Insbesondere können die Stege 63, 64 oder die radial innen liegenden Stege 63 an einer Haube 68 angeordnet sein, die mit nach unten ragenden Stiften 69 an ihrer Unterseite in dazu passende Öffnungen 70 in der Oberseite 71 des Kerns 55 einsteckbar ist, so dass die Drehbewegung des Kerns 55 über die Haube 68 auf die Stege 63, 64 oder zumindest auf die radial innen liegenden Stege 63 übertragen wird.

An diesen Grobfilter 62 schließt sich radial außerhalb desselben ein ringförmiger Abweiser 77 an, der größere Holzkohlestücke radial nach außen zwingt und also von dem darunter liegenden Trichter 70 fernhält.

Es hat sich allerdings gezeigt, dass auf dieser Haube 68 eine vermehrte Tendenz besteht, dass sich dort Holzgaskondensat niederschlägt in Form einer klebrigen, teerartigen Masse, die beständig weiter als Keim für einen zunehmenden Niederschlag dient und dazu führt, dass sich allmählich, aber dennoch kontinuierlich eine Verklumpung aus einem teerartigen Kondensat auf der Haube 68 an der Oberseite 71 des Kerns 55 bildet. Eine solche Verklumpung würde ständig weiter wachsen und den für die Beschickung mit Holzschnitzeln benötigten Querschnitt im Bereich unterhalb der Luftzuführung 14 zusetzen. Ohne zusätzliche bauliche Maßnahme könnte eine solche Verklumpung an der Oberseite der Haube 68 sogar dazu beitragen, im Laufe der Zeit den Grobfilter 62 zu verstopfen, mit dem Effekt, dass die geamte Mechanik innerhalb des Holzgaskessels 1 in regelmäßigen, kurzen Abständen zerlegt und gesäubert werden muss, was jeweils einen Stillstand des Holzgaskessels und damit der ganzen Anlage zur Folge hat.

Um dies zu vermeiden, ist oberhalb der Haube 68 ein Kondensatabweiser 72 installiert, der eben die Ausbildung einer solchen Verklumpung verhindern soll.

Dieser umfasst eine in ihrer Mitte nach oben gewölbte Haube 73, die radial nach allen Seiten hin abfällt. Aufgrund ihrer Wölbung, die entweder kalottenförmig sein kann oder konisch bzw. kegelförmig, und die aus einer reinen Metalloberfläche besteht, wird dort ggf. niedergeschlagenes Holzgaskondensat radial nach außen abgeleitet und kann sich also nicht auf dieser Haube 73 festsetzen. Dabei fließt das Holzgaskondensat allein aufgrund der Schwerkraft entlang der Wölbung der Haube 73 nach radial außen und gelangt dabei in heißere Bereiche des Holzgaskessels 1, wo das Holzgaskondensat gecrackt wird und also keinen dauerhaften Niederschlag bilden kann.

Die Peripherie der Haube 73 des Kondensatabweisers 72 befindet sich oberhalb des Grobfilters 62. Damit dort eventuell liegen gebliebene Holzschnitzel entfernt werden, ist die Haube 73 des Kondensatabweisers 72 entlang ihres Umfangs mit radial auskragenden, beispielsweise laschenförmigen Fortsätzen 74 versehen. Damit diese Fortsätze 74 über den Grobfilter 62 hinweg gleiten können, ist erfindungsgemäß weiter vorgesehen, dass sich der Kondensatabweiser 72 mit einer anderen Geschwindigkeit dreht als der Grobfilter 62 bzw. dessen an dem Kern 55 festgelegte Stege 63. Dies kann z.B. dadurch erreicht werden, dass sich der Kondensatabweiser 72 überhaupt nicht dreht, oder dass er sich langsamer oder schneller dreht als der Kern 55, oder dass er sich entgegen dem Drehsinn des Kerns 55 dreht.

Um dies sicherzustellen, ist der Kondensatabweiser 72 über einen oberseitigen, zylindermantelförmigen Fortsatz 75 drehfest mit der zentralen Achse 28 verbunden. Zu diesem Zweck kann der oberseitige, zylindermantelförmige Fortsatz 75 bspw. schlitzförmige Einkerbungen 76 aufweisen, in welche ein quer zur Achse 28 verlaufender Stift eingreifen kann, um die Drehgeschwindigkeit der zentralen Achse 28 dem Kondensatabweiser 72 mitzuteilen. Diese Drehgeschwindigkeit wird am unteren Ende der Achse 28 vorgegeben, entweder indem die Achse 28 dort fest und unverdrehbar fixiert ist, oder indem sie dort mit einem Antrieb gekoppelt ist, der sich vorzugsweise unterhalb des Kesselbodens 2 befindet.

Die durch den Kern 55 des Holzgaskessels 1 von dessen Kesselboden 2 bis zu dem Kondensatabweiser 72 reichende Achse 28 koppelt eine Antriebseinrichtung unterhalb des Kesselbodens 2 mit dem Kondensatabweiser 72 und erlaubt es daher, jenem eine andere Umdrehungsgeschwindigkeit zu erteilen wie der darunter liegenden Baugruppe bestehend aus Grobfilter 62, zentralem Kern 55, Stern 44 und der peripheren Einfassung 41, die mit dem zentralen Kern 55 .über starre Speichen in Form der Bleche 39 verbunden ist.

Wie beabsichtigt, kann der Kondensatabweiser 72 dank seines zentralen Drehantriebs nicht nur in entgegengesetzter Richtung umlaufen wie die obige Baugruppe bestehend aus Grobfilter 62, zentralem Kern 55, Stern 44 und der peripheren Einfassung 41, oder schneller oder langsamer umlaufen als jene Baugruppe oder sogar stillstehen; er könnte, im Gegensatz zu jener Baugruppe, auch kontinuierlich rotiert werden, während die darunter befindliche Baugruppe bspw. nur zeitweise in Drehbewegung versetzt wird.

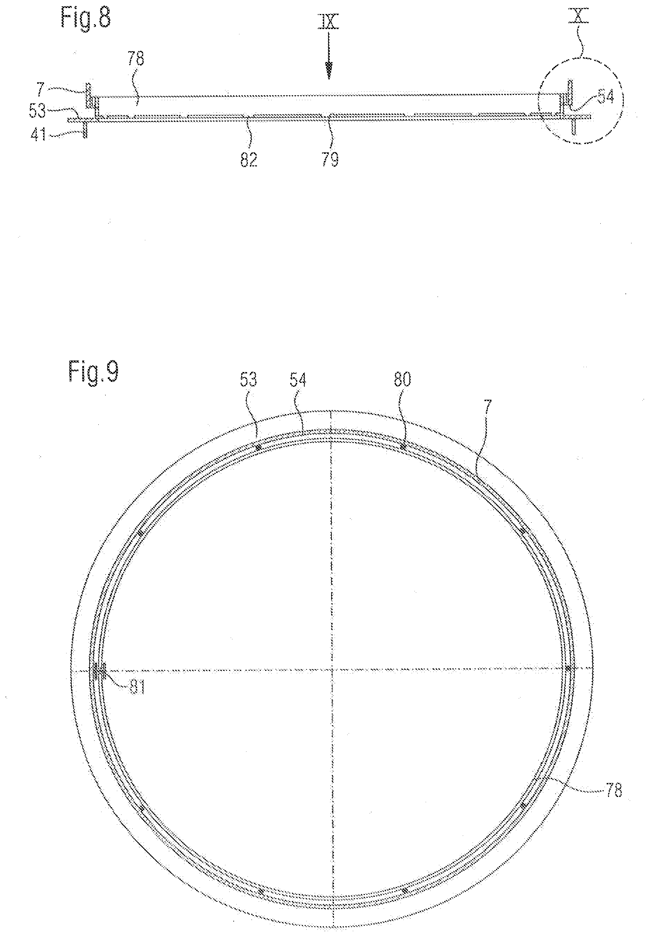

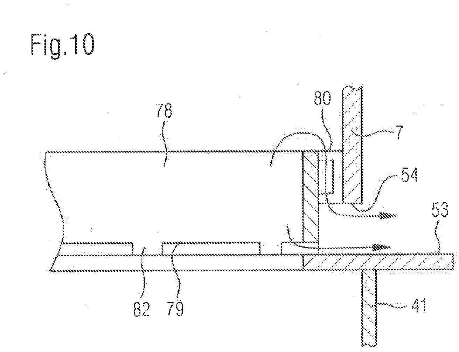

In den Figuren 8 bis 10 ist ein etwa ringförmiges Dichtungsteil 78 zur Abdichtung eines rundum laufenden Spaltes zwischen der oberen Kesselwand 7 einerseits und dem peripheren Zylindermantel 41 des drehbaren Einsatzes andererseits wiedergegeben. Dieser hat zwei Aufgaben: Einerseits soll ein Hindurchtritt des erzeugten Gases möglich sein; andererseits sollen größere Holz-, Kohle- und Aschepartikel vor einem Durchtritt zurückgehalten werden, damit diese nicht den mantelförmigen Gasabzugsraum innerhalb des unteren Kesselmantels 4 zusetzen können.

Das etwa zylindermantelförmige Dichtungsteil 78 besteht aus einem zu einem Ring gebogenen Metallstreifen mit kerbenförmigen Ausnehmungen 79 an der Unterkante, welche durch vergleichsweise schmale Stege 82 zwischen den Ausnehmungen 79 voneinander getrennt sind. Diese Ausnehmungen 79 sind ihrerseits relativ flach und erlauben den Durchtritt des Gases, sind aber zu schmal für größere Kohle- und Aschereste.

An der Außenseite des Dichtungsteils 78 sind im oberen Bereich mehrere Abstandhalter 80 vorgesehen, welche bspw. durch vertikale, nach außen ragende Bleche oder Bügel gebildet sein können. Diese überbrücken den = hoizontalen Spalt zwischen dem unteren Abschnitt 54 der oberen Kesselwand 7 und dem darin mit einem radialen Abstand aufgenommenen Dichtungselement 78 in radialer Richtung und sorgen für eine Zentrierung des etwa ringförmigen Dichtungsteils 78 innerhalb der oberen Kesselwand 7. Zwischen den in Umfangsrichtung voneinander beabstandeten Abstandhaltern 80 verbleiben jeweils spaltförmige Zwischenräume, welche den Durchtritt von Holzgas erlauben, aber größere Kohle- oder Aschepartikel jedoch zurückhalten.

Die beiden Enden des zu einem Ring gebogenen Metallstreifens sind in dem Dichtungsteil 78 vorzugsweise nicht miteinander verbunden. Dort verbleibt ein Spalt, und in diesen Spalt kann ein Mitnehmer 81 eingreifen, der an der Innenseite 15 der oberen Kesselwand 7 auf Höhe des Dichtungselements 78 befestigt ist und radial nach innen vorspringt und den Spalt zwischen den einander zugewandten Enden des zu einem Ring gebogenen Metallstreifens des Dichtungsteile 78 durchgreift. Dadurch wird das Dichtungsteil 78 gegenüber der oberen Kesselwand 7 drehfest fixiert und kann sich nicht mit dem drehbaren Einsatz mitdrehen. Durch diese ständige Relativbewegung wird verhindert, dass sich die Ausnehmungen 79 zusetzen können.

Der Mitnehmer 81 kann radial innerhalb des ringförmig gebogenen Dichtungsstreifens 78 Verdickungen oder gar Flansche aufweisen, welche das Dichtungsteil 78 innen umgreifen und dadurch verhindern, dass dieses sich von dem Mitnehmer lösen kann. Eine ergänzende Führungswirkung können Verdickungen oder Flansche an dem Mitnehmer 81 radial außerhalb des ringförmig gebogenen Dichtungsstreifens 78 haben.

Bezugszeichenliste

| | | | |
|---|---|---|---|
| 1 | Holzgaskessel | 26 | Hülse |
| 2 | Kesselboden | 27 | zylinderförmiges Teil |
| 3 | Stege | 28 | Achse |
| 4 | unterer Kesselmantel | 29. | Dreheinrichtung |
| 5 | oberer Rand | 30 | Ascheräumer |
| 6 | Flansch | 31 | Rohr |
| 7 | obere Kesselwand | 32 | Hülse |
| 8 | Flansch | 33 | Haube |
| 9 | Entnahmeöffnung | 34 | Löcher |
| 10 | Ringraum | 35 | Stege |

(fortgesetzt)

| | | | |
|---|---|---|---|
| 11 | Ringraum | 36 | Platte |
| 12 | Außenwand | 37 | nabenförmiges Teil |
| 13 | Kesselgehäuse | 38 | Außenseite |
| 14 | Luftzuführung | 39 | Blech |
| 15 | Innenseite | 40. | Ende |
| 16 | Luftkanal | 41 | Zylindermantel |
| 17 | Klammer | 42 | Flügel |
| 18 | Ausströmdüsen | 43 | Längsachse |
| 19 | Ascherost | 44 | Stern |
| 20 | Symmetrieachse | 45 | Mittelabschnitt |
| 21 | Tragarm | 46 | Achsstummel |
| 22 | Schürze | 47 | Verzahnung |
| 23 | oberer Bereich | 48 | Zahn |
| 24 | Unterkante | 49 | Finger |
| 25 | Tragelement | 50 | Öffnung |
| 51 | Mantelfläche | 76 | schlitzförmige Einkerbung |
| 52 | Öffnungen | 77 | Abweiser |
| 53 | Oberkante | 78 | ringförmiges Dichtungsteil |
| 54 | Unterkante | 79 | Ausnehmung |
| 55 | Kern | 80 | Abstandhalter |
| 56 | Zylindermantel | 81 | Mitnehmer |
| 57 | Boden | 82 | Steg |
| 58 | Durchbrechung | | |
| 59 | Durchbrechung | | |
| 60 | trichterförmiges Element | | |
| 61 | Rippe | | |
| 62 | Grobfilter | | |
| 63 | Steg | | |
| 64 | äußere Einfassung | | |
| 65 | Steg | | |
| 66 | Steg | | |
| 67 | Schamotte-Stein | | |
| 68 | Haube | | |
| 69 | Stift | | |
| 70 | Öffnung | | |
| 71 | Oberseite | | |
| 72 | Kondensatabweiser | | |
| 73 | Haube | | |
| 74 | Fortsatz | | |
| 75 | Fortsatz | | |

## Patentansprüche

1. Holzgaskessel (1) mit einem Kesselgehäuse (13), das sich bevorzugt untergliedert in einen Kesselboden (2), einen unteren Kesselmantel (4), eine obere Kesselwand (7) und einen Kesseldeckel, wobei im Inneren des Kesselgehäuses eine Einrichtung (14) zur Luftzufuhr angeordnet ist sowie wenigstens ein Rost (19), wobei auf dem Rost (19) aus Holzschnitzeln in einem Glutbett Holzgas erzeugt wird, das absaugbar und/oder nach außen abführbar ist, wobei im Bereich des Glutbetts oberhalb des Rostes (19) ein Stern (44) angeordnet ist mit einer Mehrzahl von Flügeln (42), deren Längsachsen (43) sich sternförmig von einer zentralen, vertikalen Achse (20) des Holzgaskessels (1) weg radial nach außen erstrecken, **dadurch gekennzeichnet, dass** die Flügel (42) um je eine jeweils radial zu der zentralen vertikalen Achse (20) verlaufende Drehachse drehbar gelagert sind.

**2.** Holzgaskessel (1) nach Anspruch 1, **gekennzeichnet durch** eine den Stern (44) radial außen umgebenden Einfassung (41), die vorzugsweise mit einem zentralen Kern oder einer Nabe (37) innerhalb des Sterns (44) starr verbunden ist, insbesondere über mehrere strahlenförmige Speichen oder radiale Bleche (39).

**3.** Holzgaskessel (1) nach Anspruch 1 oder 2, **dadurch gekennzeichnet, dass** die Flügel (42) an ihren in Bezug auf die zentrale vertikale Achse (20) radial außen liegenden Enden drehbar gelagert sind, vorzugsweise an einer den Stern (44) radial außen umgebenden Einfassung (41).

**4.** Holzgaskessel (1) nach einem der vorhergehenden Ansprüche, **dadurch gekennzeichnet, dass** wenigstens ein Flügel (42) an seinem radial innen liegenden Ende und/oder an seinem radial außen liegenden Ende mit einem Lagerungsfortsatz (46) versehen ist, vorzugsweise wobei wenigstens ein Pendant zu einem Lagerungsfortsatz (46) eines Flügels (42) an einer den Stern (44) radial außen umgebenden Einfassung (41), und/oder im Bereich eines zentralen Kerns oder einer Nabe (37) des Sterns (44) angeordnet ist, insbesondere wobei in einer den Stern (44) radial außen umgebenden Einfassung (41) eine der Anzahl von Flügeln (42) entsprechende Anzahl von Löchern vorgesehen ist mit einem substantiell kreisförmigen Querschnitt zum Durchtritt je eines Lagerungsfortsatzes (46) an dem radial äußeren Ende jedes Flügels (42) unter Einhaltung eines eine Drehung des jeweiligen Flügels (42) ermöglichenden Spieles.

**5.** Holzgaskessel (1) nach einem der vorhergehenden Ansprüche, **dadurch gekennzeichnet, dass** wenigstens ein Flügel (42) mit wenigstens einem Antrieb zur Drehung um eine bezüglich der vertikalen Drehachse (20) radial verlaufende Drehachse gekoppelt oder koppelbar ist, vorzugsweise wobei die Ankopplung eines Antriebs zur Drehung eines Flügels (42) um eine bezüglich der vertikalen Drehachse (20) radial verlaufende Drehachse an dem radial außen liegenden Ende des betreffenden Flügels (42) und/oder an dem radial außen liegenden Lagerungsfortsatz (46), und/oder radial außerhalb einer den Stern (44) radial außen umgebenden Einfassung (41) erfolgt, insbesondere wobei ein Flügel (42) zu seinem Drehantrieb an seinem radial außen liegenden Ende, und/oder an dem radial außen liegenden Lagerungsfortsatz (46), und/oder radial außerhalb einer den Stern (44) radial außen umgebenden Einfassung (41), eine drehfeste Verzahnung (47) aufweist, deren Zähne von der Drehachse des betreffenden Flügels (42) radial nach außen weisen, beispielsweise wobei der Antrieb für wenigstens einen Flügel (42) diskontinuierlich erfolgt.

**6.** Holzgaskessel (1) nach einem der vorhergehenden Ansprüche, **dadurch gekennzeichnet, dass** der Stern (44) mit der Mehrzahl von Flügeln (42) um die zentrale vertikale Achse (20) des Holzgaskessels (1) drehbar ist, vorzugsweise wobei der Antrieb für wenigstens einen Flügel (42) von einer Drehung des Sterns (44) abgeleitet ist, insbesondere wobei wenigstens ein feststehender Finger (49) oder ein sonstiges vorzugsweise ortsfestes Hindernis vorgesehen ist, der (das) bei einer bestimmten Drehstellung des Sterns (44) mit einem Zahn (48) der Verzahnung (47) an einem Flügel (42) in Eingriff gelangt und bei einer weiteren Drehung des Sterns (44) um dessen vertikale Drehachse (20) den Flügel (42) um seine horizontale oder radiale Drehachse weiterdreht.

**7.** Holzgaskessel (1) nach Anspruch 6, **dadurch gekennzeichnet, dass** eine Antriebsmechanik derart ausgelegt ist, dass der Stern (44) und/oder die Einfassung (41)

  a) in vorgegebenen Zeitintervallen drehbar ist (sind), und/oder
  b) schrittweise drehbar ist (sind), und/oder
  c) sich etwa eine Minute lang drehen, wonach ca. eine Viertel-Umdrehung zurückgelegt ist, und dass danach der Stern (44) und die Einfassung (41) ca. 20 bis 30 Minuten lang stehen bleiben.

**8.** Holzgaskessel (1) nach einem der vorhergehenden Ansprüche, **dadurch gekennzeichnet, dass** wenigstens ein Flügel (42) eine langgestreckte Gestalt aufweist mit einer Längsachse (43), die zu der radial in Bezug auf die zentrale vertikale Drehachse (20) verlaufenden Drehachse parallel oder koaxial ist, vorzugsweise wobei wenigstens ein Flügel (42) in einem Mittelabschnitt zwischen seinen Lagerungen oder Enden profilförmig ausgebildet ist, insbesondere wobei wenigstens ein Flügel (42) in seinem profilförmigen Abschnitt einen runden oder mehreckigen Querschnitt aufweist.

**9.** Holzgaskessel (1) nach einem der vorhergehenden Ansprüche, **dadurch gekennzeichnet dass** wenigstens ein Flügel (42) zumindest bereichsweise hohl ausgebildet ist, vorzugsweise wobei wenigstens ein Flügel (42) eine oder mehrere Öffnungen (50) in seiner Mantelfläche (51) aufweist, wodurch das Ein- oder Ausströmen von Holzgas in den oder aus dem Hohlraum des Flügels (42) möglich ist, insbesondere wobei wenigstens eine Öffnung (50) in der Mantelfläche (51) eines Flügels (42) länglich ausgebildet ist, beispielsweise wobei die Längsrichtung der Öffnung (50) quer zu der Drehsachse des betreffenden Flügels (42) ausgerichtet ist.

10. Holzgaskessel (1) nach Anspruch 9, **dadurch gekennzeichnet, dass** der Hohlraum in wenigstens einem Flügel (42) sich durch wenigstens einen Lagerungsfortsatz (46) erstreckt, vorzugsweise bis zu einer Öffnung in der freien Stirnseite des betreffenden Lagerungsfortsatzes (46), vorzugsweise wobei sich die Öffnung in der freien Stirnseite des radial außen liegenden Lagerungsfortsatzes (46) des Flügels (42) befindet, bevorzugt radial außerhalb der Einfassung (41) des Sterns (44), insbesondere derart, dass wenigstens ein Flügel (42) zum Abzug von Holzgas aus dem Glutbett dienen kann, welches an den Öffnungen (50) in der Mantelfläche (51) des Flügels (42) in einen kanalförmigen Hohlraum innerhalb des Flügels (42) eintritt und den Flügel (42) an einer endseitigen, bevorzugt koaxialen Öffnung desselben, vorzugsweise an seinem radial außen liegenden Ende, beispielsweise radial außerhalb der Einfassung (41) des Sterns (44), wieder verlässt.

11. Holzgaskessel (1) nach einem der vorhergehenden Ansprüche, **dadurch gekennzeichnet, dass**

   a) eine den Stern (44) umgebende Einfassung (41) eine oder mehrere Öffnungen (52) zum Austritt oder Absaugen von Holzgas aufweist, und/oder dass
   b) zum Absaugen des Holzgases eine Absaugeinrichtung vorgesehen ist, die das Holzgas bevorzugt an einen Verbrennungs-Antriebsmotor weiterleitet, der insbesondere zwecks Erzeugung von elektrischer Energie an einen elektrischen Generator angeschlossen sein kann.

12. Holzgaskessel (1) nach einem der vorhergehenden Ansprüche, **dadurch gekennzeichnet, dass** die obere Kesselwand (7) nicht in einem Stück bis zu dem Rost (19) herabreicht, sondern nach unten durch eine untere Kesselwand (41) fortgesetzt wird, die sich innerhalb des unteren Kesselmantels (4) befindet, und wobei zwischen dem unteren Ende (54) der oberen Kesselwand (7) und dem oberen Ende (53) der unteren Kesselwand (41) ein horizontal umlaufender Spalt angeordnet ist, wobei in dem Bereich des besagten Spaltes eine ringförmige Dichtung vorgesehen ist mit einem Dichtungselement (78) aus einem zylindermantelförmig gebogenen Metallstreifen, der konzentrisch zu einer zentralen Achse (20) der oberen Kesselwand (7) angeordnet ist.

13. Holzgaskessel (1) nach Anspruch 12, **dadurch gekennzeichnet, dass** die untere Kesselwand

   a) um eine zentrale, vertikale Achse (20) des Holzgaskessels (1) drehbar gelagert ist, und/oder
   b) durch eine den Stern (44) radial außen umgebenden Einfassung (41) gebildet ist, die vorzugsweise mit einem zentralen Kern oder einer Nabe (37) innerhalb des Sterns (44) starr verbunden ist, insbesondere über mehrere strahlenförmige Speichen oder radiale Bleche (39).

14. Holzgaskessel (1) nach einem der Ansprüche 12 oder 13, **dadurch gekennzeichnet, dass** das besagte Dichtungselement (78) durch mehrere entlang seines Umfangs angeordnete, radiale Abstandhalter (80) von der oberen Kesselwand (7) in radialer Richtung auf Abstand gehalten wird, vorzugsweise wobei die radialen Abstandhalter (80) an dem Dichtungselement (78) fixiert sind und in radialer Richtung zu der oberen Kesselwand (7) vorspringen, insbesondere wobei die radialen Abstandhalter (80) an dem Dichtungselement (78) eine flächige Gestalt aufweisen, die in einer vertikalen Radialebene liegt.

15. Holzgaskessel (1) nach einem der Ansprüche 12 bis 14, **dadurch gekennzeichnet, dass** das Dichtungselement (78)

   a) weder mit der oberen Kesselwand (7) noch mit der unteren Kesselwand (41) integriert ist, und/oder
   b) an seiner unteren Stirnseite mehrere entlang seines Umfangs angeordnete, vertikal nach unten vorspringende Stege (82) aufweist und mit diesen auf dem oberen Rand (53) der unteren Kesselwand (41) aufsitzt, vorzugsweise wobei der obere Rand (53) der unteren Kesselwand (41) als flache Ringscheibe ausgebildet ist, auf welcher das Dichtungselement (78) mit seinen vertikal nach unten vorspringenden Stegen (82) aufsitzt.

16. Holzgaskessel (1) nach einem der Ansprüche 12 bis 15, **gekennzeichnet durch** einen Mitnehmer (81), welcher in den Spalt zwischen den beiden Enden des aus einem Metallstreifen gebogenen ringförmigen Dichtungselements (78) eingreift und an einem Supportelement, bspw. einer Kesselwand (4,7,41), festgelegt ist, so dass das ringförmige Dichtungselement (78) gegenüber dem betreffenden Supportelement unverdrehbar ist, vorzugsweise wobei der Mitnehmer (81) eine Lasche mit einer flächigen Gestalt aufweist, die in einer vertikalen Radialebene liegt, bezogen auf die zentrale Achse (20) des Holzgaskessels (2), insbesondere wobei der Mitnehmer (81) oder dessen flächige Lasche in, bezogen auf das zylindermantelförmig gebogene Dichtungselement (78), tangentialer Richtung vorspringende Wülste oder Fortsätze aufweist, welche das zylindermantelförmig gebogene Dichtungselement (78) an dessen Innen- und/oder Außenseite führend umgreifen.

17. Holzgaskessel (1) nach einem der vorhergehenden Ansprüche, **gekennzeichnet durch** einen zentralen Kern (55) in Form eines Mantels (56), der einen zentralen Bereich des Holzgaskessels (1) umschließt und wenigstens eine umlaufende Reihe von Öffnungen oder Durchbrechungen (58,58) aufweist, um einen Austausch von Holzschnitzeln und Holzkohle zwischen einem zentralen Bereich und einem peripheren Bereich des Holzgaskessels (1) zu erlauben.

18. Holzgaskessel (1) nach Anspruch 17, **dadurch gekennzeichnet, dass** der Mantel (56) des zentralen Kerns (55) des Holzgaskessels (1)

   a) sich auf Höhe des besagten Dichtungselements (78) befindet, und/oder
   b) eine rotationssymmetrische oder zylindrische Gestalt aufweist, insbesondere eine kreiszylindrische Gestalt, oder eine prismatische Gestalt, insbesondere mit einem Querschnitt in Form eines regelmäßigen Vielecks.

19. Holzgaskessel (1) nach einem der Ansprüche 17 oder 18, **dadurch gekennzeichnet, dass** der zentrale mantelförmige Kern (55) des Holzgaskessels (1)

   a) einen Außendurchmesser oder mittleren Außendurchmesser aufweist, der mindestens einem Drittel des Kesseldurchmessers im Bereich der oberen Kesselwand (7) entspricht, und/oder
   b) von einer zentralen Stange oder Achse (28) in vertikaler Richtung führend durchsetzt ist.

20. Holzgaskessel (1) nach einem der Ansprüche 17 bis 19, **dadurch gekennzeichnet, dass** der zentrale, mantelförmige Kern (55) des Holzgaskessels (1) unten von einer kreisförmigen, mehreckigen und/oder ringförmigen Bodenplatte (57) abgeschlossen oder stabilisiert bzw. versteift ist, vorzugsweise wobei der zentrale, mantelförmige Kern (55) des Holzgaskessels (1) von einer Mechanik unterhalb seiner Bodenplatte (57) in eine Drehbewegung um seine zentrale vertikale Achse (20) versetzbar ist, insbesondere wobei der Kern (55) drehfest mit einem unterhalb des Kerns (55) und/oder unterhalb von dessen Bodenplatte (57) angeordneten, nabenförmigen Körper (37) des Sterns (44) verbunden ist.

21. Holzgaskessel (1) nach einem der Ansprüche 17 bis 20, **dadurch gekennzeichnet, dass** die Mantelfläche (56) des Kerns (55) des Holzgaskessels (1)

   a) eine erste, obere, rundum laufende Reihe von Durchbrechungen (58) aufweist, vorzugsweise zum Eintritt von Holz-, Kohle- oder Aschepartikeln in den Kern (55), und/oder
   b) eine zweite, untere, rundum laufende Reihe von Durchbrechungen (59) aufweist, vorzugsweise zum Austritt von Holz-, Kohle- oder Aschepartikeln aus dem Kern (55),

   vorzugsweise wobei die Breite einer Durchbrechung (58, 59) in der Mantelfläche (56) des Kerns (55) in deren unterem Bereich konstant ist und sich in ihrem oberen Bereich von unten nach oben verjüngt, insbesondere wobei die Durchbrechungen (58, 59) in der Mantelfläche des Kerns (55) nach Art eines drei-, vier- oder fünfeckigen Fensters oder eines bogenförmigen Fensters gestaltet sind.

22. Holzgaskessel (1) nach einem der Ansprüche 17 bis 21, **dadurch gekennzeichnet, dass** die Mantelfläche des Kerns (55) auf einem Niveau zwischen den oberen Durchbrechungen (58) und den unteren Durchbrechungen (59) von einem glocken- oder trichterförmigen oder konischen Körper umgeben ist, vorzugsweise wobei der den zentralen, mantelförmigen Kern des Holzgaskessels (1) außen umgebende, glocken- oder trichterförmige oder konische Körper sich von unten nach oben erweitert, und/oder wobei vorzugsweise die Mantelfläche des zentralen, mantelförmigen Kerns des Holzgaskessels (1) oberhalb des glocken- oder trichterförmigen oder konischen Körpers von einem Filter umgeben ist, insbesondere von einem Grobfilter (62).

23. Holzgaskessel (1) nach einem der Ansprüche 17 bis 22, **dadurch gekennzeichnet, dass** die Mantelfläche (56) des Kerns (55) des Holzgaskessels (1)

   a) eine Mantelfläche aufweist, die durch vertikale Rippen (61) ausgesteift oder stabilisiert ist, welche sich vorzugsweise an der Innenseite der Mantelfläche des Kerns (55) befinden, und/oder
   b) oben von einer kreisförmigen, mehreckigen und/oder ringförmigen Stirnwand abgeschlossen oder stabilisiert bzw. versteift ist.

24. Holzgaskessel (1) nach einem der vorhergehenden Ansprüche, **gekennzeichnet durch** einen zentralen Kondensatabweiser (72), der einen zentralen Bereich innerhalb des Holzgaskessels (1) überdeckt und die dortige Ablagerung von Holzschnitzeln und/oder Holzkohle vermeiden soll.

25. Holzgaskessel (1) nach Anspruch 23 in Verbindung mit Anspruch 24, **dadurch gekennzeichnet, dass** der Kondensatabweiser (72) auf der besagten oberseitigen Stirnwand des zentralen, mantelförmigen Kerns (55) aufsitzt, vorzugsweise wobei der Kondensatabweiser (72) den zentralen, mantelförmigen Kern (55) des Holzgaskessels (1) und/oder dessen obere, kreisförmige, mehreckige und/oder ringförmige Stirnwand an dessen Peripherie vollständig überdeckt.

26. Holzgaskessel (1) nach einem der Ansprüche 24 oder 25, **dadurch gekennzeichnet, dass** der Kondensatabweiser (72) einen eine zentrale Achse (20) des Holzgaskessels (1) umgebenden, flächigen oder ringförmigen Bereich (73) mit einer geschlossenen Oberfläche aufweist, vorzugsweise wobei der besagte, flächige oder ringförmige Bereich (73) des Kondensatabweisers (72) mit einer geschlossenen Oberfläche eine punkt-oder rotationssymmetrische Gestalt aufweist, insbesondere wobei der besagte, flächige oder ringförmige Bereich (73) des Kondensatabweisers (72) mit einer geschlossenen Oberfläche nahe seinem Zentrum oder seines inneren Randes erhaben ist gegenüber seiner Peripherie oder seines äußeren Randes.

27. Holzgaskessel (1) nach einem der Ansprüche 24 bis 26, **dadurch gekennzeichnet, dass** der Kondensatabweiser (72) oder dessen ringförmiger Bereich (73) mit einer geschlossenen Oberfläche

   a) eine hauben-, mützen- oder kegelförmige Geometrie aufweist, und/oder
   b) einen Außendurchmesser aufweist, der einem Drittel des Kesseldurchmessers im Bereich der oberen Kesselwand (7) entspricht oder mehr.

28. Holzgaskessel (1) nach einem der Ansprüche 24 bis 27, **dadurch gekennzeichnet, dass** auf einem Niveau unterhalb des Kondensatabweisers (72) ein Filter angeordnet ist, insbesondere ein Grobfilter zur Zurückhaltung größerer Holz- oder Kohlestücke, vorzugsweise wobei der Kondensatabweiser (72) an seinem Außenumfang wenigstens einen etwa radial auskragenden Fortsatz aufweist, der dazu dient, Verunreinigungen von der Oberseite des darunter liegenden Filters oder Grobfilters abzuschaben oder abzukratzen, insbesondere wobei der Kondensatabweiser (72) eine andere Umdrehungsgeschwindigkeit aufweist wie der darunter angeordnete Filter oder Grobfilter, beispielsweise eine entgegengesetzt gerichtete Umdrehungsgeschwindigkeit.

29. Holzgaskessel (1) nach einem der Ansprüche 24 bis 28, **dadurch gekennzeichnet, dass** der Kondensatabweiser (72)

   a) im Bereich seines Zentrums oder des inneren Randes seines ringförmigen Bereichs (73) drehfest mit einer vertikalen Achse (28) gekoppelt ist und von dieser vertikalen Achse (28) in Drehrichtung festgelegt oder angetrieben wird, und/oder
   b) über seinen ringförmigen Bereich (73) auf einer darunter befindlichen Konstruktion aufsitzt und von dieser getragen und/oder in seiner Lage stabilisiert wird, beispielsweise von einer auf der besagten oberseitigen Stirnwand des zentralen, mantelförmigen Kerns (55) abgestützten Tragkonstruktion.

**Claims**

1. A wood gas boiler (1) comprising a boiler housing (13), which is preferably partitioned into a boiler bottom (2), a lower boiler jacket (4), an upper boiler casing (7) and a boiler cover, wherein a device (14) for supplying air is arranged within the boiler housing, as well as at least one grating (19), wherein wood gas is generated in a firebed from wood chips on the grating (19), the wood gas being extractable by suction and/or removable to the outside, wherein a star (44) with a plurality of vanes (42) is provided in the region of the firebed above the grating (19), the longitudinal vane axes (43) extending in a star shape radially outward from a central vertical axis (20) of the wood gas boiler (1), **characterized in that** the vanes (42) are each supported to be rotatable about a respective axis of rotation extending radially with respect to the central vertical axis (20).

2. The wood gas boiler (1) according to claim 1, **characterized by** a rim (41) radially surrounding the star (44) on the outside and preferably rigidly connected to a central core or a hub (37) within the star (44), in particular through a plurality of star-shaped spokes or radial sheets (39).

3. The wood gas boiler (1) according to claim 1 or 2, **characterized in that** the vanes (42) are rotatably supported at their ends that are radially outer with respect to the central vertical axis (20), preferably at a rim (41) radially surrounding the star (44) on the outside.

4. The wood gas boiler (1) according to any one of the preceding claims, **characterized in that** at least one vane (42) is provided with a support extension (46) at said vane's radially inner end and/or at said vane's radially outer end, preferably wherein at least one counterpart to a support extension (46) of a vane (42) is arranged at a rim (41) surrounding the star (44) radially on the outside and/or in the region of a central core or a hub (37) of the star (44), especially wherein a number of holes corresponding to the number of vanes (42) are provided in a rim (41) surrounding the star (44) radially on the outside, wherein said holes have a substantially circular cross section for one each of the support extensions (46) to pass through at the radially outer end of each vane (42) while maintaining a clearance which permits a rotation of the respective vane (42).

5. The wood gas boiler (1) according to any one of the preceding claims, **characterized in that** at least one vane (42) is coupled or may be coupled with at least one drive for rotation about an axis of rotation extending radially with respect to the vertical axis of rotation (20), preferably wherein the coupling of a drive to rotate a vane (42) about an axis of rotation extending radially with respect to the vertical axis of rotation (20) is carried out at the radially outer end of the respective vane (42), preferably at the radially outer support extension (46), in particular radially outside of a rim (41) surrounding the star (44) radially on the outside, especially wherein a vane (42) has a rotationally fixed toothing (47) to be rotationally driven at its radial outer end, preferably at the radially outer support extension (46), more preferably radially outside of a rim (41) surrounding the star (44) radially on the outside, the teeth of said toothing pointing radially outwards from the axis of rotation of the respective vane (42), for example wherein the driving is discontinuous for at least one vane (42).

6. The wood gas boiler (1) according to any one of the preceding claims, **characterized in that** the star (44) having the plurality of vanes (42) may be rotated about the central vertical axis (20) of the wood gas boiler (1), preferably wherein the driving for at least one vane (42) is derived from a rotation of the star (44), especially wherein at least one fixed finger (49) or another preferably stationary barrier is provided, which, in a particular rotational position of the star (44), engages with a tooth (48) of the toothing (47) at a vane (42) and upon further rotation of the star (44) about its vertical axis of rotation (20) continues to rotate the vane (42) about its horizontal or radial axis of rotation.

7. The wood gas boiler (1) according to claim 6, **characterized in that** a drive mechanism is configured such that at least one of the star (44) and the rim (41)

   a) may be rotated at predetermined time intervals, and/or
   b) may be rotated incrementally, and/or
   c) rotate for about one minute, after which about one quarter rotation has been covered, and such that the star (44) and the rim (41) are stationary for about 20 to 30 minutes thereafter.

8. The wood gas boiler (1) according to any one of the preceding claims, **characterized in that** at least one vane (42) has an elongated shape having a longitudinal axis (43) which is parallel or coaxial to the axis of rotation extending radially with respect to the central vertical axis of rotation (20), preferably wherein at least one vane (42) has a profiled shape in a middle section between its supports or ends, especially wherein at least one vane (42) has a round or polygonal cross section in its profiled section.

9. The wood gas boiler (1) according to any one of the preceding claims, **characterized in that** at least one vane (42) is at least sectionally hollow, preferably wherein at least one vane (42) has one or more openings (50) in its lateral surface (51) which allows wood gas to flow into or out of the cavity of the vane (42), especially wherein at least one opening (50) in the lateral surface (51) of a vane (42) is elongate in shape, wherein the longitudinal direction of the opening (50) is preferably oriented transversely to the axis of rotation of the respective vane (42).

10. The wood gas boiler (1) according to claim 9, **characterized in that** the cavity within at least one vane (42) extends through at least one support extension (46), preferably up to an opening in the free end face of the respective support extension (46), preferably wherein the opening is located in the free end face of the radial outer support extension (46) of the vane (42), preferably radially outside of the rim (41) of the star (44), espcially in such a way that at least one vane (42) can serve to extract wood gas from the firebed which enters through the openings (50) in the lateral surface (51) of the vane (42) into a channel-shaped cavity within the vane (42) and exits the vane (42) at an opening at its end which is preferably coaxial, preferably at its radial outer end, more preferably radially outside of the rim (41) of the star (44).

11. The wood gas boiler (1) according to any one of the preceding claims, **characterized in that**

a) a rim (41) surrounding the star (44) has one or more openings (52) for egress or suctional extraction of wood gas, and/or **in that**
b) a suction device is provided for suctioning the wood gas, wherein said suction device preferably passes the wood gas to a combustion drive motor which may preferably be coupled with an electrical generator for generating electrical energy.

12. The wood gas boiler (1) according to any one of the preceding claims, **characterized in that** the upper boiler casing (7) does not extend down to the grating (19) in one piece, but is continued downwards through a lower boiler casing (41) which is located within the lower boiler jacket (4), and wherein a horizontally circumferential gap is located between the lower end (54) of the upper boiler casing (7) and the lower end (53) of the lower boiler casing (41), an annular seal being provided in the region of said gap and having a sealing element (78) which is made of a metal strip curved in a shape of a cylinder jacket and arranged concentrically to a central axis (20) of the upper boiler casing (7).

13. The wood gas boiler (1) according to claim 12, **characterized in that** the lower boiler casing

a) is supported to be rotatable about a central, vertical axis (20) of the wood gas boiler (1), and/or
b) is formed by a rim (41) radially surrounding the star (44) on the outside, the rim being preferably rigidly connected to a central core or a hub (37) within the star (44), in particular through a plurality of star-shaped spokes or radial sheets (39).

14. The wood gas boiler (1) according to any one of claims 12 or 13, **characterized in that** said sealing element (78) is maintained at a distance from the upper boiler casing (7) in the radial direction by means of a plurality of radial spacers (80) arranged along the element's circumference, preferably wherein the radial spacers (80) are fixed to the sealing element (78) and protrude radially towards the upper boiler casing (7), especially wherein the radial spacers (80) on the sealing element (78) have a planar shape that lies in a vertical radial plane.

15. The wood gas boiler (1) according to any one of claims 12 to 14, **characterized in that** the sealing element (78)

a) is neither integrated with the upper boiler casing (7) nor with the lower boiler casing (41), and/or
b) has a plurality of webs (82) at its lower end face arranged along its circumference protruding vertically downwards and rests with these webs on the upper edge (53) of the lower boiler casing (41), preferably wherein the upper edge (53) of the lower boiler casing (41) is embodied as a flat annual disc on which the sealing element (78) rests with its webs (82) which protrude vertically downwards.

16. The wood gas boiler (1) according to any one of claims 12 to 15, **characterized by** a driver (81) which engages with the gap between the two ends of the annular sealing element (78) curved from a metal strip and is fixed to a support element, for example a boiler casing (4, 7, 41), such that the annular sealing element (78) cannot be rotated with respect to the respective support element, preferably wherein the driver (81) has a tab having a planar shape that lies in a vertical radial plane with respect to the central axis (20) of the wood gas boiler (2), especially wherein the driver (81) or its planar tab has ridges or extensions protruding tangentially with respect to the sealing element (78) curved in cylinder-jacket shape which guidedly encompass the sealing element (78) curved in cylinder-jacket shape at its inner and/or outer sides,

17. The wood gas boiler (1) according to any one of the preceding claims, **characterized by** a central core (55) in the shape of a jacket (56) which encloses a central region of the wood gas boiler (1) and has at least one circumferential series of openings or through holes (58, 58) to allow an exchange of wood chips and charcoal between a central region and a peripheral region of the wood gas boiler (1).

18. The wood gas boiler (1) according to claim 17, **characterized in that** the jacket (56) of the central core (55) of the wood gas boiler (1)

a) is located at the level of said sealing element (78), and/or
b) has a rotationally symmetric or cylindrical shape, preferably a circular cylindrical shape, or a prismatic shape, preferably having a cross section in the shape of a regular polygon.

19. The wood gas boiler (1) according to any one of claims 17 or 18, **characterized in that** the central, jacket-shaped core (55) of the wood gas boiler (1)

a) comprises an outer diameter or a mean outer diameter, which corresponds to at least one third of the boiler diameter in the region of the upper boiler casing (7), and/or
b) is vertically penetrated by a central rod or shaft (28).

20. The wood gas boiler (1) according to any one of claims 17 to 19, **characterized in that** the central, jacket-shaped core (55) of the wood gas boiler (1) is closed off, or stabilized and/or reinforced at the bottom by a circular, polygonal and/or annular base plate (57), preferably wherein the central, jacket-shaped core (55) of the wood gas boiler (1) may be set into rotary motion about its central vertical axis (20) by a mechanism underneath its base plate (57), especially wherein the core (55) is connected to a hub-shaped body (37) of the star (44) arranged below the core (55) and/or below the core's base plate (57) in a rotationally fixed manner.

21. The wood gas boiler (1) according to any one of claims 17 to 20, **characterized in that** the lateral surface (56) of the core (55) of the wood gas boiler (1)

a) comprises a first, upper, circumferential series of through holes (58), preferably for ingress of wood particles, coal particles or ash particles into the core (55), and/or
b) comprises a second, lower, circumferential series of through holes (59), preferably for egress of wood particles, coal particles or ash particles from the core (55),

preferably wherein the width of a through hole (58, 59) in the lateral surface (56) of the core (55) is constant in its lower region and tapers from top to bottom in its upper region, especially wherein the through holes (58, 59) in the lateral surface of the core (55) are shaped in the manner of a triangular,. rectangular or pentagonal window or an arched window.

22. The wood gas boiler (1) according to any one of claims 17 to 21, **characterized in that** the lateral surface of the core (55) is surrounded by a bell-shaped or funnel-shaped or conical body at a level between the upper through holes (58) and the lower through holes (59), preferably wherein the bell-shaped or funnel-shaped or conical body surrounding the central, jacket-shaped core of the wood gas boiler (1) on the outside expands from bottom to top, and/or wherein preferably the lateral surface of the central, jacket-shaped core of the wood gas boiler (1) is surrounded by a filter, preferably a coarse filter (62), above the bell-shaped or funnel-shaped or conical body.

23. The wood gas boiler (1) according to any one of claims 17 or 22, **characterized in that** the central, jacket-shaped core (55) of the wood gas boiler (1)

a) is reinforced or stabilized by vertical ribs (61) located preferably at the inside of the lateral surface of the core (55), and/or
b) is closed off, or stabilized and/or reinforced at the top by a circular, polygonal and/or annular end wall.

24. The wood gas boiler (1) according to any one of the preceding claims, **characterized by** a central condensate deflector (72) which covers a central region within the wood gas boiler (1) and is to prevent a deposit of wood chips and/or charcoal in this region,

25. The wood gas boiler (1) according to claim 23 in connection with claim 24, **characterized in that** the condensate deflector (72) rests on said top end wall of the central, jacket-shaped core (55), preferably wherein the condensate deflector (72) covers the central, jacket-shaped core (55) of the wood gas boiler (1) and/or its upper circular, polygonal and/or annular end wall at the periphery thereof completely.

26. The wood gas boiler (1) according to any one of claims 24 or 25, **characterized in that** the condensate deflector (72) has a planar or annular region (73) surrounding a central axis (20) of the wood gas boiler (1) and having a closed surface, preferably wherein said planar or annular region (73) of the condensate deflector (72) with a closed surface is of a point symmetric or rotationally symmetric shape, especially wherein said planar or annular region (73) with a closed surface is elevated near its center or near its inner edge with respect to its periphery or its outer edge.

**27.** The wood gas boiler (1) according to any one of claims 24 to 26, **characterized in that** the condensate deflector (72) or its annular region (73) with a closed surface

a) has a hood-, cap- or cone-shaped geometry, and/or
b) has an outer diameter, which corresponds to one third or more of the boiler diameter in the region of the upper boiler casing (7).

**28.** The wood gas boiler (1) according to any one of claims 24 to 27, **characterized in that** a filter, preferably a coarse filter for retaining larger wood or coal pieces, is arranged at a level below the condensate deflector (72), preferably wherein the condensate deflector (72) has at least one radially protruding extension at its outer perimeter, which is to scrape or strip off contaminants from the upper side of the filter or coarse filter located underneath, especially wherein the condensate deflector (72) has a different rotational speed compared to the filter or coarse filter located underneath, for example a rotational speed in the opposite direction.

**29.** The wood gas boiler (1) according to any one of claims 24 to 28, **characterized in that** the condensate deflector (72)

a) is rotationally fixedly coupled with a vertical shaft (28) in the region of its center or of the inner edge of its annular region (73) and is fixed or driven in the direction of rotation by means of this vertical shaft (28), and/or
b) rests, via its annular region (73), on a structure arranged underneath and is supported and/or stabilized in its position by said structure, for example by a support structure resting on said top end wall of the central, jacket-shaped core (55).

## Revendications

**1.** Chaudière à gaz de bois (1) comprenant un corps de chaudière (13) qui de préférence se subdivise en un fond de chaudière (2), une chemise inférieure de chaudière (4), une paroi supérieure de chaudière (7) et un capot de chaudière, en ce qu'un dispositif (14) d'amenée d'air est disposé à l'intérieur du corps de chaudière ainsi qu'au moins une grille (19), en ce qu'un gaz de bois est produit sur la grille (19) à partir de copeaux de bois dans un lit incandescent, lequel gaz peut être aspiré et/ou évacué vers l'extérieur, en ce qu'une étoile (44) est disposée dans la zone du lit incandescent au-dessus de la grille (19) avec une pluralité de branches (42), dont les axes longitudinaux (43) s'éloignent en étoile d'un axe (20) central vertical de la chaudière à gaz de bois (1) radialement vers l'extérieur, **caractérisée en ce que** les branches (42) sont montées chacune de manière à pouvoir tourner autour d'un axe de rotation s'étendant respectivement radialement par rapport à l'axe (20) central vertical.

**2.** Chaudière à gaz de bois (1) selon la revendication 1, **caractérisée par** un bord (41) entourant radialement à l'extérieur l'étoile (44), ledit bord étant de préférence relié de manière rigide à un noyau central ou à un moyeu (37) à l'intérieur de l'étoile (44), en particulier par l'intermédiaire de plusieurs rayons radiaux ou de tôles radiales (39).

**3.** Chaudière à gaz de bois (1) selon la revendication 1 ou 2, **caractérisée en ce que** les branches (42) sont montées de manière à pouvoir tourner au niveau de leurs extrémités situées radialement à l'extérieur par rapport à l'axe (20) central vertical, de préférence au niveau d'un bord (41) entourant radialement à l'extérieur l'étoile (44).

**4.** Chaudière à gaz de bois (1) selon l'une des revendications précédentes, **caractérisée en ce qu'**au moins une branche (42) comporte à son extrémité située radialement à l'intérieur et/ou à son extrémité située radialement à l'extérieur un prolongement de palier (46), de préférence **en ce qu'**au moins un pendant à un prolongement de palier (46) d'une branche (42) est disposé au niveau d'un bord (41) entourant radialement à l'extérieur l'étoile (44), et/ou dans la zone d'un noyau central ou d'un moyeu (37) de l'étoile (44), en particulier **en ce que** dans un bord (41) entourant radialement à l'extérieur l'étoile (44) un nombre de trous correspondant au nombre de branches (42) est prévu d'une section sensiblement circulaire par rapport au passage de respectivement un prolongement de palier (46) au niveau de l'extrémité radialement à l'extérieur de chaque branche (42) en respectant un jeu permettant une rotation de la branche respective (42).

**5.** Chaudière à gaz de bois (1) selon l'une des revendications précédentes, **caractérisée en ce qu'**au moins une branche (42) est couplée ou peut être couplée à au moins un entraînement pour la rotation autour d'un axe de rotation s'étendant radialement par rapport à l'axe (20) de rotation vertical, de préférence **en ce que** le couplage d'un entraînement pour la rotation d'une branche (42) autour d'un axe de rotation s'étendant radialement par rapport à l'axe (20) de rotation vertical s'effectue au niveau de l'extrémité située radialement à l'extérieur de la branche (42) correspondante et/ou au niveau du prolongement de palier (46) situé radialement à l'extérieur, et/ou radialement à l'extérieur d'un bord (41) entourant radialement à l'extérieur l'étoile (44), en particulier **en ce qu'**une branche (42) par rapport à son entraînement rotatif à son extrémité située radialement à l'extérieur, et/ou au prolongement de palier (46) situé radialement à l'extérieur, et/ou radialement à l'extérieur d'un bord (41) entourant radialement à l'extérieur l'étoile (44), comporte une denture (47) solidaire en rotation, dont les dents pointent radialement à l'extérieur de l'axe de rotation de la branche (42) correspondante, par exemple **en ce que** l'entraînement s'effectue de manière discontinue pour au moins une branche (42).

6. Chaudière à gaz de bois (1) selon l'une des revendications précédentes, **caractérisée en ce que** l'étoile (44) avec la pluralité de branches (42) peut tourner autour de l'axe (20) central vertical de la chaudière à gaz de bois (1), de préférence **en ce que** l'entraînement pour au moins une branche (42) est dérivé d'une rotation de l'étoile (44), en particulier **en ce qu'**au moins un doigt fixe (49) ou un autre obstacle de préférence stationnaire est prévu, qui à une position de rotation définie de l'étoile (44) s'engrène avec une dent (48) de la denture (47) à une branche (42) et à une autre rotation de l'étoile (44) autour de son axe (20) de rotation vertical continue à tourner la branche (42) autour de son axe de rotation horizontal ou radial.

7. Chaudière à gaz de bois (1) selon la revendication 6, **caractérisée en ce qu'**un mécanisme d'entraînement est dimensionné de telle sorte que l'étoile (44) et/ou le bord (41)

   a) peut (peuvent) tourner à des intervalles de temps prédéfinis, et/ou
   b) peut (peuvent) tourner progressivement, et/ou
   c) peuvent tourner pendant approximativement une minute, selon quoi approximativement un quart de tour est effectué, puis que l'étoile (44) et le bord (41) s'arrêtent pendant environ 20 à 30 minutes.

8. Chaudière à gaz de bois (1) selon l'une des revendications précédentes, **caractérisée en ce qu'**au moins une branche (42) présente une forme allongée avec un axe longitudinal (43) qui est parallèle ou coaxial à l'axe de rotation s'étendant radialement par rapport à l'axe (20) de rotation central vertical, de préférence **en ce qu'**au moins une branche (42) est réalisée sous forme de profilé dans une section centrale entre ses paliers ou extrémités, en particulier **en ce qu'**au moins une branche (42) présente dans sa section en forme de profilé une section transversale ronde ou polygonale.

9. Chaudière à gaz de bois (1) selon l'une des revendications précédentes, **caractérisée en ce qu'**au moins une branche (42) est réalisée tout au moins partiellement de manière creuse, de préférence **en ce qu'**au moins une branche (42) comporte une ou plusieurs ouvertures (50) dans sa surface d'enveloppe (51), ce qui permet l'entrée ou le dégagement de gaz de bois dans la ou de la cavité de la branche (42), en particulier **en ce qu'**au moins une ouverture (50) est réalisée de manière allongée dans la surface de l'enveloppe (51) d'une branche (42), par exemple **en ce que** le sens de la longueur de l'ouverture (50) est orienté transversalement par rapport à l'axe de rotation de la branche (42) correspondante.

10. Chaudière à gaz de bois (1) selon la revendication 9, **caractérisée en ce que** la cavité s'étend dans au moins une branche (42) par au moins un prolongement de palier (46), de préférence jusqu'à une ouverture dans la face frontale libre du prolongement de palier (46) correspondant, de préférence **en ce que** l'ouverture est située dans la face frontale libre du prolongement de palier (46) radialement à l'extérieur de la branche (42), avantageusement radialement en dehors du bord (41) de l'étoile (44), en particulier de telle sorte qu'au moins une branche (42) peut servir d'évacuation de gaz de bois du lit incandescent qui se produit au niveau des ouvertures (50) dans la surface d'enveloppe (51) de la branche (42) dans une cavité en forme de canal à l'intérieur de la branche (42) et qui ressort de la branche (42) au niveau de son ouverture côté extrémité, avantageusement coaxiale, de préférence au niveau de son extrémité située radialement à l'extérieur, par exemple radialement en dehors du bord (41) de l'étoile (44).

11. Chaudière à gaz de bois (1) selon l'une des revendications précédentes, **caractérisée**

   a) **en ce qu'**un bord (41) entourant l'étoile (44) comporte une ou plusieurs ouvertures (52) pour la sortie ou l'aspiration de gaz de bois, et/ou
   b) **en ce qu'**un dispositif d'aspiration est prévu pour aspirer le gaz de bois, ledit dispositif transférant le gaz de bois de préférence à un moteur d'entraînement à combustion interne, lequel peut être raccordé à un générateur électrique en particulier à des fins de production d'énergie électrique.

12. Chaudière à gaz de bois (1) selon l'une des revendications précédentes, **caractérisée en ce que** la paroi supérieure de la chaudière (7) ne descend pas d'un seul tenant jusqu'à la grille (19), mais se prolonge vers le bas par une paroi inférieure de la chaudière (41) qui est située à l'intérieur de la chemise inférieure de la chaudière (4), et **en ce qu'**un espace circonférentiel horizontal est disposé entre l'extrémité inférieure (54) de la paroi supérieure de la chaudière (7) et l'extrémité supérieure (53) de la paroi inférieure de la chaudière (41), **en ce qu'**un joint annulaire est prévu dans la zone dudit espace avec un élément d'étanchéité (78) constitué d'une lame de métal courbée en forme d'enveloppe cylindrique, qui est disposée concentriquement par rapport à un axe (20) central de la paroi supérieure de la chaudière (7).

**13.** Chaudière à gaz de bois (1) selon la revendication 12, **caractérisée en ce que** la paroi inférieure de la chaudière

a) est montée de manière à pouvoir tourner autour d'un axe (20) central vertical de la chaudière à gaz de bois (1), et/ou
b) est formée par un bord (41) entourant radialement à l'extérieur l'étoile (44), ledit bord étant relié de manière rigide de préférence à un noyau central ou à un moyeu (37) à l'intérieur de l'étoile (44), en particulier par l'intermédiaire de plusieurs rayons radiaux ou de tôles radiales (39).

**14.** Chaudière à gaz de bois (1) selon l'une des revendications 12 ou 13, **caractérisée en ce que** ledit élément d'étanchéité (78) est écarté de la paroi supérieure de la chaudière (7) dans le sens radial par plusieurs écarteurs (80) radiaux disposés le long de son pourtour, de préférence **en ce que** les écarteurs radiaux (80) sont fixés sur l'élément d'étanchéité (78) et font saillie dans le sens radial par rapport à la paroi supérieure de la chaudière (7), en particulier **en ce que** les écarteurs radiaux (80) présentent au niveau de l'élément d'étanchéité (78) une forme plane qui se situe dans un plan radial vertical.

**15.** Chaudière à gaz de bois (1) selon l'une des revendications 12 à 14, **caractérisée en ce que** l'élément d'étanchéité (78)

a) n'est intégré ni à la paroi supérieure de la chaudière (7) ni à la paroi inférieure de la chaudière (41), et/ou
b) comporte au niveau de sa face frontale inférieure plusieurs nervures (82) disposées le long de son pourtour faisant saillie verticalement vers le bas et est positionné avec celles-ci sur le bord supérieur (53) de la paroi inférieure de la chaudière (41), de préférence **en ce que** le bord supérieur (53) de la paroi inférieure de la chaudière (41) est réalisé sous forme de rondelle plate, sur laquelle l'élément d'étanchéité (78) repose avec ses nervures (82) saillantes verticalement vers le bas.

**16.** Chaudière à gaz de bois (1) selon l'une des revendications 12 à 15, **caractérisée par** un entraîneur (81) qui s'engage dans l'espace entre les deux extrémités de l'élément d'étanchéité (78) annulaire courbé constitué d'une lame de métal et est fixé à un élément support, par exemple, à une paroi de chaudière (4, 7, 41) de telle sorte que l'élément d'étanchéité (78) annulaire ne peut pas tourner par rapport à l'élément support en question, de préférence en ce que l'entraîneur (81) comporte une languette de forme plate qui est située dans un plan radial vertical, par rapport à l'axe (20) central de la chaudière à gaz de bois (2), en particulier en ce que l'entraîneur (81) ou sa languette plate, par rapport à l'élément d'étanchéité (78) courbé en forme d'enveloppe cylindrique, comporte dans le sens tangentiel des talons saillants ou des prolongements qui entourent en le guidant l'élément d'étanchéité (78) courbé en forme d'enveloppe cylindrique sur son côté intérieur et/ou extérieur.

**17.** Chaudière à gaz de bois (1) selon l'une des revendications précédentes, **caractérisée par** un noyau central (55) en forme d'enveloppe (56) qui entoure une zone centrale de la chaudière à gaz de bois (1) et comporte au moins une rangée circonférentielle d'ouvertures ou perforations (58, 58) pour permettre un échange de copeaux de bois et de charbon de bois entre une zone centrale et une zone périphérique de la chaudière à gaz de bois (1).

**18.** Chaudière à gaz de bois (1) selon la revendication 17, **caractérisée en ce que** l'enveloppe (56) du noyau central (55) de la chaudière à gaz de bois (1)

a) se trouve au niveau dudit élément d'étanchéité (78), et/ou
b) présente une forme à symétrie de révolution ou cylindrique, en particulier une forme cylindrique circulaire, ou une forme prismatique, en particulier avec une section transversale en forme de polygone régulier.

**19.** Chaudière à gaz de bois (1) selon l'une des revendications 17 ou 18, **caractérisée en ce que** le noyau central (55) en forme d'enveloppe de la chaudière à gaz de bois (1)

a) comporte un diamètre extérieur ou diamètre extérieur moyen qui correspond au moins à un tiers du diamètre de la chaudière dans la zone de la paroi supérieure de la chaudière (7), et/ou
b) est traversé par une tige centrale ou axe (28) le guidant dans le sens vertical.

20. Chaudière à gaz de bois (1) selon l'une des revendications 17 à 19, **caractérisée en ce que** le noyau central (55) en forme d'enveloppe de la chaudière à gaz de bois (1) est bloqué ou stabilisé ou bien renforcé en bas par une plaque de fond (57) circulaire, polygonale et/ou annulaire, de préférence **en ce que** le noyau central (55) en forme d'enveloppe de la chaudière à gaz de bois (1) est déplaçable par un mécanisme au-dessous de sa plaque de fond (57) dans un mouvement de rotation autour de son axe (20) central vertical, en particulier **en ce que** le noyau (55) est relié de manière solidaire en rotation à un corps en forme de moyeu (37) de l'étoile (44), ledit corps étant disposé au-dessous du noyau (55) et/ou au-dessous de sa plaque de fond (57).

21. Chaudière à gaz de bois (1) selon l'une des revendications 17 à 20, **caractérisée en ce que** la surface d'enveloppe (56) du noyau (55) de la chaudière à gaz de bois (1)

a) comporte une première rangée de perforations (58) supérieure sur tout le pourtour, de préférence pour l'entrée de particules de bois, de charbon ou de cendres dans le noyau (55), et/ou
b) comporte une deuxième rangée de perforations (59) inférieure sur tout le pourtour, de préférence pour la sortie de particules de bois, de charbon ou de cendres du noyau (55),

de préférence **en ce que** la largeur d'une perforation (58, 59) dans la surface d'enveloppe (56) du noyau (55) est constante dans sa zone inférieure et diminue de bas en haut dans sa zone supérieure, en particulier **en ce que** les perforations (58, 59) dans la surface d'enveloppe du noyau (55) sont conçues sous forme de fenêtre triangulaire, quadrangulaire ou pentagonale ou de fenêtre cintrée.

22. Chaudière à gaz de bois (1) selon l'une des revendications 17 à 21, **caractérisée en ce que** la surface d'enveloppe du noyau (55) à un niveau entre les perforations supérieures (58) et les perforations inférieures (59) est entourée par un corps conique ou en forme de cloche ou d'entonnoir, de préférence **en ce que** le corps conique ou en forme de cloche ou d'entonnoir entourant à l'extérieur le noyau central en forme d'enveloppe de la chaudière à gaz de bois (1) s'élargit de bas en haut, et/ou **en ce que** de préférence la surface d'enveloppe du noyau central en forme d'enveloppe de la chaudière à gaz de bois (1) au-dessus du corps conique ou en forme de cloche ou d'entonnoir est entourée par un filtre, en particulier par un filtre primaire (62).

23. Chaudière à gaz de bois (1) selon l'une des revendications 17 à 22, **caractérisée en ce que** la surface d'enveloppe (56) du noyau (55) de la chaudière à gaz de bois (1)

a) comporte une surface d'enveloppe, qui est renforcée ou stabilisée par des nervures verticales (61), lesdites nervures se trouvant de préférence sur le côté intérieur de la surface d'enveloppe du noyau (55), et/ou
b) est bloquée ou stabilisée ou bien renforcée du haut par une face avant circulaire, polygonale et/ou annulaire.

24. Chaudière à gaz de bois (1) selon l'une des revendications précédentes, **caractérisée par** un déflecteur de condensat (72) central, qui recouvre une zone centrale à l'intérieur de la chaudière à gaz de bois (1) et dont le but est d'éviter le dépôt de copeaux de bois et/ou de charbon de bois.

25. Chaudière à gaz de bois (1) selon la revendication 23 en association avec la revendication 24, **caractérisée en ce que** le déflecteur de condensat (72) est monté sur ladite face avant supérieure du noyau central (55) en forme d'enveloppe, de préférence **en ce que** le déflecteur de condensat (72) recouvre complètement le noyau central (55) en forme d'enveloppe de la chaudière à gaz de bois (1) et/ou sa face avant supérieure, circulaire, polygonale et/ou annulaire au niveau de sa périphérie.

26. Chaudière à gaz de bois (1) selon l'une des revendications 24 ou 25, **caractérisée en ce que** le déflecteur de condensat (72) comporte une zone (73) plane ou annulaire avec une surface fermée entourant un axe (20) central de la chaudière à gaz de bois (1), de préférence **en ce que** ladite zone (73) plane ou annulaire du déflecteur de condensat (72) avec une surface fermée a une forme à symétrie ponctuelle ou à symétrie de révolution, en particulier **en ce que** ladite zone (73) plane ou annulaire du déflecteur de condensat (72) avec une surface fermée à proximité de son centre ou de son bord intérieur est convexe par rapport à sa périphérie ou son bord extérieur.

27. Chaudière à gaz de bois (1) selon l'une des revendications 24 à 26, **caractérisée en ce que** le déflecteur de condensat (72) ou sa zone (73) annulaire avec une surface fermée

a) présente une géométrie en forme de calotte, de chapeau ou de cône, et/ou
b) présente un diamètre extérieur qui correspond à un tiers ou plus du diamètre de chaudière dans la zone de la paroi supérieure de la chaudière (7).

28. Chaudière à gaz de bois (1) selon l'une des revendications 24 à 27, **caractérisée en ce qu'**un filtre est disposé à un niveau au-dessous du déflecteur de condensat (72), en particulier un filtre primaire destiné à la retenue de plus grands morceaux de bois ou de charbon, de préférence **en ce que** le déflecteur de condensat (72) comporte au niveau de son périmètre extérieur au moins un prolongement approximativement radialement en saillie qui sert à racler ou gratter des impuretés de la face supérieure du filtre ou filtre primaire sous-jacent, en particulier **en ce que** le déflecteur de condensat (72) présente une autre vitesse de rotation que le filtre ou filtre primaire qui est disposé en dessous, par exemple une vitesse de rotation dirigée en sens inverse.

29. Chaudière à gaz de bois (1) selon l'une des revendications 24 à 28, **caractérisée en ce que** le déflecteur de condensat (72)

a) est couplé de manière solidaire en rotation à un axe vertical (28) dans la zone de son centre ou du bord intérieur de sa zone (73) annulaire et réglé ou entraîné par cet axe vertical (28) dans le sens de rotation, et/ou
b) est monté au-dessus de sa zone (73) annulaire sur une construction se trouvant en dessous et est porté par celle-ci et/ou stabilisé dans sa position, par exemple par une structure porteuse soutenue sur ladite face avant supérieure du noyau central (55) en forme d'enveloppe.

Fig.1

Fig.2

Fig.3

Fig.4

Fig.5

Fig.6

Fig.7

Fig.8

78

7
53
41

82    79

54

IX

X

Fig.9

53    54    80    7

81

78

Fig.10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009042104 B4